(19) Europäisches Patentamt
European Patent Office
Office européen des brevets

(11) **EP 3 691 002 B1**

(12) **EUROPEAN PATENT SPECIFICATION**

(45) Date of publication and mention of the grant of the patent:
**09.09.2026 Bulletin 2026/37**

(21) Application number: **17927039.2**

(22) Date of filing: **29.09.2017**

(51) International Patent Classification (IPC):
***H01M 4/62*** *(2006.01)* ***H01M 4/13*** *(2010.01)*
***H01M 50/403*** *(2021.01)* ***H01M 50/417*** *(2021.01)*
***H01M 50/426*** *(2021.01)* ***H01M 50/429*** *(2021.01)*
***H01M 50/44*** *(2021.01)* ***H01M 50/446*** *(2021.01)*
***H01M 4/139*** *(2010.01)* ***H01M 10/0565*** *(2010.01)*
***H01M 50/46*** *(2021.01)* ***H01M 10/0585*** *(2010.01)*
***H01M 10/0587*** *(2010.01)* ***H01M 10/0568*** *(2010.01)*
***H01M 10/0569*** *(2010.01)* ***C08K 7/02*** *(2006.01)*
***C08K 9/04*** *(2006.01)* ***C08L 1/02*** *(2006.01)*
***C08L 27/16*** *(2006.01)*

(52) Cooperative Patent Classification (CPC):
(C-Sets available)
**H01M 50/44; C08B 3/12; C08K 7/02; C08K 9/04; C08L 1/02; C08L 27/16; H01M 4/13; H01M 4/139; H01M 4/622; H01M 4/623; H01M 10/0565; H01M 10/0568; H01M 10/0569; H01M 10/0585; H01M 10/0587;** (Cont.)

(86) International application number:
**PCT/JP2017/035626**

(87) International publication number:
**WO 2019/064538 (04.04.2019 Gazette 2019/14)**

(54) **BINDER FOR LITHIUM ION BATTERIES, AND ELECTRODE AND SEPARATOR USING SAME**

BINDEMITTEL FÜR LITHIUM-IONEN-BATTERIEN UND ELEKTRODE UND SEPARATOR DAMIT

LIANT POUR BATTERIES AU LITHIUM-ION, ET ÉLECTRODE ET SÉPARATEUR UTILISANT CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.08.2020 Bulletin 2020/32**

(73) Proprietors:
- **Attaccato Limited Liability Company**
  **Izumi-shi, Osaka 594-0004 (JP)**
- **The Japan Steel Works, Ltd.**
  **Tokyo 141-0032 (JP)**

(72) Inventors:
- **MUKAI Takashi**
  **Izumi-shi**
  **Osaka 594-1157 (JP)**
- **IKEUCHI Yuta**
  **Izumi-shi**
  **Osaka 594-1157 (JP)**
- **SAKAMOTO Taichi**
  **Izumi-shi**
  **Osaka 594-1157 (JP)**
- **YAMASHITA Naoto**
  **Izumi-shi**
  **Osaka 594-1157 (JP)**
- **ISHIGURO Ryo**
  **Hiroshima-shi**
  **Hiroshima 736-8602 (JP)**
- **NAKAMURA Satoru**
  **Hiroshima-shi**
  **Hiroshima 736-8602 (JP)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(74) Representative: **Grünecker Patent- und Rechtsanwälte PartG mbB Leopoldstraße 4 80802 München (DE)**

(56) References cited:

**EP-A1- 3 098 880**
**WO-A1-2014/185365**
**WO-A1-2014/185365**
**WO-A1-2014/196551**
**WO-A1-2014/196551**
**JP-A- 2002 260 663**
**JP-A- 2002 260 663**
**JP-A- 2009 293 167**
**JP-A- 2009 293 167**
**JP-A- 2013 185 085**
**JP-A- 2013 185 085**
**JP-A- 2015 101 694**
**JP-A- 2015 101 694**
**JP-A- 2016 111 001**

- **REN Z ET AL: "A microporous gel electrolyte based on poly(vinylidene fluoride-co-hexafluoropropylene)/fully cyanoethylated cellulose derivative blend for lithium-ion battery", ELECTROCHIMICA ACTA, ELSEVIER, AMSTERDAM, NL, vol. 54, no. 6, 15 February 2009 (2009-02-15), pages 1888 - 1892, XP025882385, ISSN: 0013-4686, [retrieved on 20081018], DOI: 10.1016/ J.ELECTACTA.2008.10.011**
- **YOSHIDA NAOKI: "Surface chemical modification of cellulose nanofiber (octanoylation)", SUSTAINABLE HUMANOSPHERE: BULLETIN OF RESEARCH INSTITUTE FOR SUSTAINABLE HUMANOSPHERE, 10 September 2010 (2010-09-10), pages 1 - 2, XP055806380, Retrieved from the Internet <URL:https:// repository.kulib.kyoto-u.ac.jp/dspace/bitstream/ 2433/182500/3/rishsh_00600_032.pdf> [retrieved on 20210520]**
- **SATO AKIHIRO ET AL: "Surface modification of cellulose nanofibers with alkenyl succinic anhydride for high-density polyethylene reinforcement", COMPOSITES PART A: APPLIED SCIENCE AND MANUFACTURING, ELSEVIER, AMSTERDAM, NL, vol. 83, 10 November 2015 (2015-11-10), pages 72 - 79, XP029431145, ISSN: 1359-835X, DOI: 10.1016/ J.COMPOSITESA.2015.11.009**

(52) Cooperative Patent Classification (CPC): (Cont.)
**H01M 50/403; H01M 50/417; H01M 50/426; H01M 50/429; H01M 50/4295; H01M 50/446; H01M 50/46;** H01M 2300/0085; Y02E 60/10; Y02P 70/50

C-Sets
**C08K 7/02, C08L 27/16;**
**C08K 9/04, C08L 27/16;**
**C08L 1/02, C08L 27/16;**
**C08L 27/16, C08K 3/22, C08L 1/02;**
**C08L 27/16, C08L 1/02**

## Description

TECHNICAL FIELD

The present invention relates to a binder contained in an electrode or a separator of a lithium ion battery, and an electrode and a separator containing the binder.

BACKGROUND ART

The field of use of the secondary battery is developed from an electronic device to an automobile, a large power storage system, or the like, and the market size of the secondary battery is expected to grow to an industry of 10 trillion yen or more. In particular, information communication devices such as a mobile phone, a smartphone, and a tablet terminal have spread widely, and the global penetration rate has exceeded 30%.

In addition, the secondary battery has been widely applied to a power source of next-generation vehicles such as an electric vehicle (EV), a plug-in hybrid electric vehicle (PHEV), and a hybrid electric vehicle (HEV). The secondary battery is used for home backup power supply, power storage of natural energy, load leveling, and the like since the Great East Japan Earthquake in 2011, and the use of the secondary battery tends to be enlarged. As described above, it can be said that the secondary battery is also essential in the introduction of energy-saving technology and new energy technology.

Conventionally, as the secondary battery, an alkaline secondary battery such as a nickel-cadmium (Ni-Cd) battery and a nickel-hydrogen (Ni-MH) battery is the mainstream, but the use of a lithium ion battery, which is a nonaqueous electrolyte secondary battery, is increasing because of the characteristics of small size, light weight, high voltage, and no memory effect. The lithium ion battery includes a positive electrode, a negative electrode, a separator, an electrolytic solution or electrolytes, and a battery jar (battery case).

An electrode such as a positive electrode or a negative electrode includes an active substance, a conductive aid, a binder, and a current collector. In general, the electrode is produced by mixing an active material, a conductive aid, and a binder into a solvent such as an organic solvent and water to form a slurry, applying the slurry onto a current collector (mainly, aluminum on a positive electrode, copper or nickel on a negative electrode), drying, and then rolling by a roll press.

In the positive electrode active substance, mainly, lithium cobaltate ($LiCoO_2$), a ternary material (Li(Ni, Co, Mn) $O_2$), and nickel-cobalt-lithium aluminum oxide (Li(Ni, Co, Al)$O_2$) have already been widely used as positive electrode materials for practical batteries. Recently, a positive electrode material such as a lithium-rich solid solution-based material ($Li_2MnO_3$-$LiMO_2$) or a lithium silicate-based material ($Li_2MSiO_4$) has been actively studied and developed.

$LiCoO_2$ exhibits a discharge voltage of 3.7 V (vs. $Li/Li^+$) or more and has an effective discharge capacity of about 150 mAh/g to obtain stable cycle-life characteristics, so that $LiCoO_2$ is mainly used for mobile devices. However, since there is a problem that large batteries such as an in-vehicle (EV, PHEV, HEV) battery or power storage battery are easily affected by the price range of cobalt (Co), a positive electrode of a ternary material (Li(Ni, Co, Mn)$O_2$ hereinafter, referred to as NCM) with a reduced amount of Co;, a positive electrode of nickel-cobalt-lithium aluminum oxide (Li(Ni, Co, Al)$O_2$; hereinafter referred to as NCA) with a reduced amount of Co, and the like are used.

In the NCM, charge and discharge characteristics can be adjusted by changing a molar ratio of three transition metal elements composed of nickel (Ni), cobalt (Co), and manganese (Mn).

In the NCM positive electrode prior to the year 2015, a material having a molar ratio of the transition metal of Ni:Co:Mn = 1:1:1 ($Li(Ni_{0.33}Co_{0.33}Mn_{0.33})O_2$; hereinafter referred to as NCM111) was mainstream, but from the year 2016 onwards, a material of Ni:Co:Mn = 5:2:3 ($Li(Ni_{0.5}Co_{0.2}Mn_{0.3})O_2$; hereinafter referred to as NCM523) with reduced amount of Co and increased amount of Ni is widely used. In recent years, research and development of the NCM positive electrode, such as a material ($Li(Ni_{0.6}Co_{0.2}Mn_{10.2})O_2$) of Ni:Co:Mn = 6:2:2 and a material ($Li(Ni_{0.8}Co_{0.1}Mn_{0.1})O_2$) of Ni:Co:Mn = 8:1:1, is active.

NCA is a positive electrode material obtained by substituting Co for a Ni site of lithium nickelate ($LiNiO_2$) and adding aluminum (Al). In general NCA, the molar ratio of Ni, Co, and Al is 0.65 or more and 0.95 or less for Ni, 0.1 or more and 0.2 or less for Co, and 0.01 or more and 0.20 or less for Al. By making NCA having this element ratio, migration of Ni cations is prevented, thermal stability and durability are improved as compared with $LiNiO_2$, and a discharge capacity larger than that of $LiCoO_2$ is obtained.

These nickel-rich NMC positive electrode and NCA positive electrode are expected to have higher capacity and lower cost than $LiCoO_2$.

In the negative electrode active substance, mainly, black lead (graphite), hard carbon (non-graphitizable carbon), soft carbon (graphitizable carbon), lithium titanate ($Li_4Ti_5O_{12}$), and the like have already been widely used as negative electrode substances for practical batteries. Recently, these materials are mixed with a silicon (Si)-based material or a tin (Sn)-based material to achieve a high capacity of the negative electrode.

Graphite exhibits an effective discharge capacity of 340 mAh/g to 360 mAh/g, nearly a theoretical capacity of 372

mAh/g, and exhibits excellent cycle-life characteristics.

The hard carbon and the soft carbon are amorphous carbon materials, and the effective discharge capacity is 150 mAh/g to 250 mAh/g, and the discharge capacity is lower than that of the crystalline graphite, but the output characteristics are excellent.

$Li_4Ti_5O_{12}$ has a running discharge capacity of 160 mAh/g to 180 mAh/g capacity, which is lower than that of graphite or an amorphous carbon material, but the potential at the time of charging is about 1.5 V away from the lithium deposition potential, and the risk of deposition of lithium dendrite is small.

The Si-based material and the Sn-based material are classified into alloy-based materials, and as the effective electrical capacity, Si exhibits a discharge capacity of 3000 mAh/g to 3600 mAh/g and Sn exhibits a discharge capacity of 700 mAh/g to 900 mAh/g.

The reason that rolling is conducted after drying electrodes such as a positive electrode and a negative electrode is to increase a contact area with the conductive aid and the current collector by reducing the volume of the active substance layer of the electrode, that is, the coating layer including the active substance, the conductive aid, and the binder. As a result, the electron conduction network of the active substance layer is firmly constructed and the electron conductivity is improved.

The binder is used to bind an active substance with an active substance, an active substance with a conductive aid, an active substance with a current collector, and a conductive aid with a current collector. The binder can be roughly classified into a "solution type", in which a binder is dissolved in a solvent for use, a "dispersion type (emulsion/latex type)", in which a solid content is dispersed in a solvent for use, and a "reaction type", in which a binder precursor reacted with heat or light for use.

In addition, the binder can be divided into an aqueous type and an organic solvent type depending on the kind of the solvent. For example, polyvinylidene fluoride (PVdF), which is a typical thermoplastic fluororesin, is a solution type binder, and an organic solvent such as N-methyl-2-pyrrolidone (NMP) is used when preparing an electrode slurry. The styrenebutadiene rubber (SBR) is a dispersion type binder and is used by dispersing SBR fine particles in water. Polyimide (PI) is a reaction type binder, and a PI precursor is dissolved or dispersed in a solvent such as NMP and subjected to a heat treatment, so that a cross-linking reaction is promoted while imidization (dehydration reaction and cyclization reaction) occurs, to obtain tough PI.

Examples of the solution type binder include polyvinylidene fluoride (PVdF) and ethylene-vinyl acetate (EVA) though depending on molecular weights or substituents therein. In addition, examples of the dispersion type binder include styrene butadiene rubber (SBR), polytetrafluoroethylene (PTFE), urethane rubber, polypropylene (PP), polyethylene (PE), polyvinyl acetate (PVAc), nitrocellulose, and cellulose nanofibers. Examples of the reaction type binder include polyimide (PI), polyamide (PA), polyamide imide (PAI), polybenzimidazole (PBI), and polybenzoxazole (PBO).

The binder using an organic solvent- , such as NMP, swells in an electrolytic solution at a high temperature and causes the electrode resistance to increase, and therefore such binders are less likely to be used in a high-temperature environment. Particularly, the thermoplastic fluororesin has a property that a swelling ratio increases as the temperature rises. For example, Patent Literature 1 states that PVdF swells in an electrolytic solution under a high-temperature environment of 50°C or higher, its bonding force becomes weak, its electrode resistance increases, and thus lacks high-temperature durability.

The aqueous solution type binders have poor oxidation resistance or poor reduction resistance, and most of the binders are gradually decomposed by repeated charge and discharge, and sufficient lifetime property cannot be obtained. In addition, their ionic conductivity is low, and thus output characteristics are poor. The dispersion type binder has an advantage of using water as a solvent, but dispersion stability is likely to be impaired by the degree of acid or alkali (pH), moisture concentration or an ambient temperature, and segregation, aggregation, sedimentation, and the like are likely to occur during mixing of an electrode slurry. Fine particles of the binder dispersed in water have a particle diameter less than 1 μm, and when moisture is vaporized by drying, the particles fuse to form a film. Since the film has no conductivity (electric conductivity) and ionic conductivity, a slight difference in used amount has a significant effect on output characteristics and lifetime property of a battery.

When an electrode slurry is produced with a binder whose solvent type is aqueous, an addition of a Li-containing active substance makes the slurry strong alkaline (pH value rises). When a pH value of the slurry is 11 or more, the slurry reacts with aluminum current collector during coating, and thus it may be difficult to obtain a uniform electrode.

Therefore, a method of coating surfaces of particles of the positive electrode active substance with carbon, ceramics, or the like has been proposed. By covering the surfaces of particles of the positive electrode active substance with carbon, ceramics, or the like, direct contact between the solvent and the active substance can be reduced even if the aqueous binder is used, and an increase in the pH value of the slurry can be prevented.

For example, Non Patent Literature 1 states that polyanion-based materials such as lithium iron phosphate ($LiFePO_4$), which is a positive electrode active substance, are carbon-coated on the surfaces of the particles, so that direct contact between the solvent and the positive electrode active substance can be reduced even if the aqueous binder is used, and an increase in the pH value of the slurry can be prevented. In addition, Non Patent Literature 1 shows cycle-life

characteristics of a battery using an acrylic binder and a PVdF-based binder for positive electrodes in an environment having a temperature of 60°C, and a positive electrode using the PVdF-based binder gradually decreases in capacity, whereas a positive electrode using the acrylic binder exhibits excellent high-temperature durability.

For example, Patent Literature 2 describes the reasons why it is difficult to use an aqueous binder for the positive electrode like the negative electrode as follows: (1) the positive electrode active substance contacts and reacts with water to cause the lithium of the positive electrode active substance to elute, leading to a decrease in positive electrode capacity; (2) oxidative decomposition of the aqueous binder occurs during charging; and (3) it is difficult to disperse a slurry, and regarding battery characteristics, there is a concern that positive electrode capacity and cycle characteristics will decrease. Therefore, Patent Literature 2 states that by use of an active substance that has a compound represented by a formula $Li_{\alpha}M_{\beta}O_{\gamma}$ (in which M is one or more metal elements selected from the group consisting of Al, Ti, Cr, Mn, Fe, Co, Ni, Cu, Zr, Nb, Mo, Ag, Ta, W, and Ir, $0 \leq \alpha \leq 6$, $1 \leq \beta \leq 5$, $0 < \gamma \leq 12$) on surfaces of particles, even if an aqueous binder is used, lithium of a positive electrode active material does not elute and the active substance capacity is not lowered, oxidative decomposition of the aqueous binder during charging can be prevented, and a positive electrode for a lithium ion secondary battery, which is excellent in high-temperature characteristics, can be obtained.

By the way, commercially available Li-containing active substance sometimes contains lithium hydroxide (LiOH) as an impurity. The reason is not clear, and it is considered that a starting material used to synthesize the Li-containing active substance remains, or that the active substance itself generates lithium hydroxide.

Particularly, among the Li-containing active substance, a positive electrode active substance such as NCM, NCA, $LiNiO_2$, $Li_2MnO_3$-$LiMO_2$, $Li_2MSiO_4$ contains a large amount of lithium hydroxide and exhibits strong alkalinity. Therefore, when a plastic fluororesin binder is used in the step of producing a slurry, the slurry may become a gel. With the gelled slurry, it is difficult to produce an electrode, and gas may be generated at the time of charge.

For example, Patent Literature 3 describes that, in a step of producing a positive electrode mixture slurry, lithium hydroxide generally reacts with a binder to cause the viscosity of the slurry to increase rapidly, and further may cause the slurry to gel. Therefore, Patent Literature 3 proposes coated nickel-based lithium-nickel composite oxide particles that do not adversely affect battery characteristics, which have high elution prevention ability to a solution by three-dimensional cross-linking of polymers on surfaces of the nickel-based lithium-nickel composite oxide particles, and which improve atmospheric stability by coating non-electron conductive polymers with ionic conductivity and electron conductive polymers with both electron conductivity and ionic conductivity.

Patent Literature 4 discloses that a $LiFePO_4$/SiO lithium ion secondary battery using PI in a positive electrode and a negative electrode can be stably charged and discharged even at a high temperature of 120°C.

The reaction type binder is excellent in all of the heat resistance, the binding property, and the chemical resistance. In particular, the PI binder exhibits high heat resistance and a binding property, and even if an active substance has a large volume change, stable lifetime property can be obtained, and the binder hardly swells even in a high-temperature electrolytic solution.

Patent Literature 5 discloses an electrode structure for a power storage device, comprising an active substance containing Si as a main component, a conductive auxiliary material, a binder, and a current collector, in which is a composite binder comprising an water soluble polymer and a cellulose nanofiber as a reinforcing material for a binder,.

The cellulose nanofiber is hydrophilic and are being dispersed in water in most cases, however, Patent Literature 6 shows cellulose nanofibers dispersed in NMP which does not contain water in a dispersion medium. By mixing the cellulose dispersion in the resin, it is expected to increase the function of the resin using light weight, high strength, high elastic modulus, low linear thermal expansion coefficient, and high heat resistance of cellulose.

In addition to the binder described above, there is almost no report in the field of a lithium ion battery, but a technique of using an inorganic binder in a secondary battery electrode is disclosed in Patent Literature 7 and Non Patent Literatures 2 and 3.

As such lithium ion batteries, batteries having various shapes such as a cylindrical shape, a square shape, and a laminate (pouch) type are widely used. For a relatively small capacity battery, a cylindrical shape battery is adopted in view of pressure resistance and ease of sealing, and for a battery with a relatively large capacity, a square shape battery is adopted in view of ease of handling.

In addition, when the electrode structure of a lithium ion battery is focused, roughly two types of a stacked type and a wound type are used. That is, in a battery of a stacked type, an electrode group, which is obtained by alternately stacking positive electrodes and negative electrodes via separators, is housed in a battery case. Most of the battery of the stacked type includes a square battery case. On the other hand, in a battery of a wound type, a positive electrode and a negative electrode are housed in a battery jar (battery case) in a state of being wound in a spiral shape while sandwiching a separator. Examples of the battery case of the wound type include a cylindrical type battery case or a square type battery case.

JP 2002 260663 A, WO 2014/185365 A1, JP 2015 101694 A, JP 2009 293167 A, WO 2014/196551 A1, JP 2013 185085 A, EP 3 098 880 A1, XP025882385, XP055806380, and XP029431145 also relate to binders for lithium ion batteries.

CITATION LIST

PATENT LITERATURE

Patent Literature 1: JP-T-2014/057627
Patent Literature 2: JP-B-5999683
Patent Literature 3: JP-B-6102837
Patent Literature 4: JP-A-2013-084521
Patent Literature 5: JP-A-2016-021332
Patent Literature 6: JP-A-2015-101694
Patent Literature 7: JP-B-6149147

NON PATENT LITERATURE

Non Patent Literature 1: Takashi Mukai et al.: Industrial Materials, vol. 63, No. 12, pp. 18 to 23 (2015)
Non Patent Literature 2: Takashi Mukai et al.: Material Stage, vol. 17, No. 5, pp. 29 to 33 (2017)
Non Patent Literature 3: Takashi Mukai et al.: "Lithium-ion secondary battery-approach to material design and evaluation method for higher capacity and improved characteristics-", Chapter 4, Section 2, Information Technology Co., Ltd., pp. 210 to 220 (2017)

SUMMARY OF INVENTION

TECHNICAL PROBLEM

As described above, the electrode using the thermoplastic fluororesin as the binder has poor high-temperature durability. On the other hand, as described in Patent Literatures 1 to 5 and Non-Patent Literatures 1 to 3, when an aqueous binder or a PI binder is used as the electrode binder, high-temperature durability can be improved. However, when exposed to water or moisture, many of the Li-containing active substance lose the electrode capacity, and their cycle-life characteristics are also deteriorated. When the surfaces of particles of the Li-containing active substance are coated with carbon or ceramics to prevent direct contact between water and the active substance, an increase in the pH value of the slurry can be prevented. However, in the step of mixing (kneading) the slurry, when the coating formed on the surfaces of particles of the active substance is peeled off, the pH value of the slurry rises instantly. Even if the binder is a binder whose solvent type is an organic solvent, in a PI-based binder obtained by a dehydration reaction caused by heat treatment, moisture generated during electrode drying comes into contact with the Li-containing active substance.

Since the PI binder has very high chemical resistance, it does not dissolve in almost any organic solvent. Therefore, in the production of the electrode slurry, polyamic acid (polyamide acid) or the like, which is a PI precursor, is dissolved in NMP for use, subjected to heat treatment at 200°C or higher, and undergone imidization reaction (dehydration cyclization reaction) to obtain PI. Then, after the imidization reaction, a crosslinking reaction is caused by heat treatment at a higher temperature to obtain a PI having a high mechanical strength. From the viewpoint of electrode life, the temperature of the heat treatment is preferably at high temperature to the extent that the PI is not carbonized. However, when the PI precursor is mixed with a Li-containing active substance having strong alkalinity, the PI precursor segregates, and a uniformly dispersed slurry is difficult to produce and the viscosity of the slurry is difficult to adjust. In addition, the heat treatment at 200°C or higher also causes increased power consumption during electrode production.

Patent Literature 5 shows that a binder is mixed with a cellulose nanofiber to make a composite as a reinforcing material of the electrode, thereby obtaining mechanical strength that can withstand stress generated at the time of the volume expansion/contraction during a lithium insertion/release reaction. It is considered that, by making a composite of the cellulose nanofibers with a water-soluble binder, the mechanical strength of an electrode is improved, breakage of a conductive network due to charge and discharge is prevented even if an active substance having a large volume change may be used.

However, the volume change of the Li-containing active substance due to charge and discharge is small. Therefore, the breakage of the conductive network due to the volume change hardly occurs. The mechanical strength of the electrode is not related to the swelling in the electrolytic solution at a high temperature. Therefore, even if the mechanical strength of the binder is improved, the cycle-life characteristics at high temperatures are not expected to be improved.

The binder is a water-soluble polymer, and is not suitable for a Li-containing active substance which is a substance that does not like contact with moisture. Since most of the aqueous binders (a solution type, a dispersion type, and a reaction type, which contains water as a solvent) undergo oxidative decomposition during charging, the characteristics (durability, cycle-life characteristics, output characteristics, etc.) of the electrode at a high temperature are not greatly improved even if the strength of the aqueous binder is enhanced. In addition, when the water-soluble binder comes into contact with a Li-containing active substance having strong alkalinity, not only the pH value of the slurry increases but also the salting-out of the binder and the viscosity of the slurry change significantly.

Patent Literature 6 shows cellulose nanofibers dispersed in NMP that do not contain water in a dispersion medium. However, when only the cellulose nanofibers dispersed in NMP are used as a binder, aggregation may occur when a slurry to which an active substance is added is mixed by a self-orbital mixer or the like.

When the solid content of the cellulose nanofibers dispersed in NMP exceeds 10 mass%, cellulose nanofibers easily aggregate, so that the solid content cannot be increased. When the cellulose nanofibers with low solid contents are used for the electrode slurry, the slurry naturally becomes a slurry with low solid content. When the slurry is applied to a current collector, the cellulose nanofibers aggregate during drying of the electrode, and thus a uniform electrode is hardly obtained and the drying time is also long. Since the density of the slurry is low, a practical electrode capacity cannot be obtained unless the coating amount of slurry per unit area is increased.

The present inventors have studied an electrode containing the cellulose nanofibers as a binder and have found that despite the problems described above, even under a high-temperature environment of 80°C, the binder does not swell by absorbing the electrolytic solution and the electrode functions as an electrode showing excellent cycle-life characteristics at a high temperature. In addition, when a binder contains only thermoplastic fluororesin as in the related art, addition of lithium hydroxide caused the binder to change to a black color and was easily gelled, however, in the cellulose nanofibers dispersed in NMP, no gelation phenomenon was observed even if lithium hydroxide was added thereto. It has been found, however, that, in addition to the above-described problems, the output characteristics of the electrode including only the cellulose nanofibers as a binder are inferior to those of the electrode using the thermoplastic fluororesin as a binder. That is, it has been shown that most of the conventional cellulose nanofibers are not suitably adapted as an electrode binder.

Patent Literature 7 shows that the swelling of the active substance layer is less likely to occur even when an electrode containing an inorganic binder, such as a silicate-based or a phosphate-based binder, comes into contact with an electrolytic solution at a high temperature. However, since the inorganic binder has a specific gravity higher than the binder (resin binder) in the related art, the electrode energy density per weight tends to decrease.

The active substance, the conductive aid, and the like contained in the electrode slurry can aggregate or precipitate as time passes when being left to stand, even if the active substance, the conductive aid, and the like are uniformly dispersed. In particular, as the specific gravity of the active substance increases, the active substance sinks to the bottom due to gravity, so that the electrode is likely to lose uniformity in a step of producing an electrode. Therefore, an electrode slurry that hardly aggregates or precipitates even after long-term standing and storage is required.

As described above, initially, the present inventors have intensively studied the application of binders containing cellulose nanofibers, but when containing only cellulose nanofibers as the electrode binder, it has been found that there are many problems at present and the electrode containing the above binder is not feasible as a practical electrode. Therefore, the inventors have conducted studies to combine the cellulose nanofibers and the binder of the thermoplastic fluororesin for which the solvent type of the binder is classified into a nonaqueous solvent (organic solvent), and have made the present invention. The present invention can solve the above-described problems in the related art and problems newly discovered by the inventors.

SOLUTION TO PROBLEM

The present invention concerns a composite nonaqueous binder according to claim 1. Preferred embodiments are defined in claims 2 to 5. Further, the present invention concerns an electrode according to claim 6. Preferred embodiments are defined in claims 7 and 8. Moreover, the present invention concerns a separator according to claim 9. A preferred embodiment is defined in claim 10. Further, the present invention concerns a lithium ion battery according to claim 11. A preferred embodiment is defined in claim 12. In addition, the present invention concerns an electrical device according to claim 13. Moreover, the present invention concerns a method of producing a composite nonaqueous binder according to claim 14, and methods for producing a lithium ion battery according to claims 15 and 16.
A binder according to the present invention is a composite nonaqueous binder of a cellulose nanofiber and a thermoplastic fluororesin for an electrode of a lithium ion battery, in which the cellulose nanofiber has a fiber diameter (diameter) of 0.002 μm or more and 1 μm or less, a fiber length of 0.5 μm or more and 10 mm or less, and an aspect ratio (fiber length of cellulose nanofibers/fiber size of cellulose nanofibers) of 2 or more and 100,000 or less. According to this, the binder prevents swelling of an electrode active substance layer in an electrolytic solution at 60°C or higher and improves cycle-life characteristics and output characteristics of an electrode at high temperatures. In addition, because the cellulose nanofibers are contained in the thermoplastic fluororesin, gelation of a slurry is less likely to occur even if a Li-containing

positive electrode material is used.

The cellulose nanofibers are a cellulose fiber group that is obtained by physically or chemically finely loosening cellulose that is a constituent material of wood and the like until the maximum fiber size thereof is 1 μm or less. Note that the cellulose nanofibers may be cellulose nanofibers obtained from animals, algae, or bacteria.

In the present invention, the fiber length is a value measured by a fiber length measurement machine (FS-200, manufactured by KAJAANI AUTOMATION). In addition, the fiber diameter can be measured by a device equivalent thereto.

More specifically, the cellulose nanofiber has preferably a fiber diameter (diameter) of 0.002 μm or more and 1 μm or less, a fiber length of cellulose nanofibers of 0.05 μm or more and 1 μm or less, and an aspect ratio (fiber length of cellulose nanofibers/fiber size of cellulose nanofibers) of 10 or more and 100,000 or less, and more preferably cellulose nanofiber has a fiber length of 0.2 μm or more and an aspect ratio (cellulose fiber length/fiber diameter of the cellulose fiber) of 20 or more and 50,000 or less.

In general, the cellulose nanofibers are produced by using a cellulose material (cellulose nanofiber precursor) as a starting material, that is, chemically treated pulp of wood, such as kraft pulp and sulfite pulp, non-wood pulp such as cotton pulp like cotton linter and cotton lint, straw pulp, and bagasse pulp, a recycled pulp recycled from waste paper, cellulose isolated from seaweed, artificial cellulose fibers, bacterial cellulose fiber from acetic acid bacteria, and cellulose fibers derived from animals such as sea squirts.

In the present invention, the cellulose nanofibers are not particularly limited as long as they correspond to the fiber diameter, the fiber length, and the aspect ratio described above. The cellulose nanofibers can be produced by performing a cellulose swelling step on the cellulose material (cellulose nanofiber precursor) described above and microfiberizing the cellulose material by a device such as a homomixer, a homogenizer, ultrasonic dispersion treatment, a beater, a refiner, a screw-type mixer, a paddle mixer, a dispermixer, a turbine mixer, a ball mill, a bead mill, and a grinder.

In the cellulose swelling step, it is sufficient to mix a liquid medium having a hydroxyl (-OH) group, which functions as a swelling agent and a dispersing solvent, with the cellulose material, and the liquid medium having -OH is preferably water and/or alcohols since water and/or alcohols is/are easily mixed with NMP, and the cellulose nanofibers hardly aggregate and precipitate in a step (B) to be described below, and water and/or alcohols effectively increase(s) the concentration of NMP in a step (C) to be described below. Examples of the alcohols include methanol, ethanol, propanol, and butanol. Here, when the amount of the cellulose and the liquid medium having -OH is taken as 100 mass%, the amount of the cellulose is preferably 0.1 mass% and more and 20 mass% or less, and more preferably 1 mass% or more and 15 mass% or less.

The cellulose nanofibers obtained in this manner contain a large amount of liquid medium having -OH, such as water and/or alcohols. Therefore, when the cellulose nanofibers are mixed with a thermoplastic fluororesin dissolved in NMP, the thermoplastic fluororesin is salted out in water or alcohols and the mixture cannot effectively function as an electrode binder.

With the thermoplastic fluororesin dispersed in the liquid medium having -OH, such as water and/or alcohols, the thermoplastic fluororesin does not contain the cellulose nanofibers therein, and the binder is a mere mixture of the thermoplastic fluororesin and the cellulose nanofibers. Accordingly, the swelling of an electrode active substance layer is less likely to be effectively prevented in a high-temperature electrolytic solution.

That is, the cellulose nanofibers are preferably made into a composite with the thermoplastic fluororesin.

Here, the term "composite" is a concept different from the term "mixture", and a mixed binder is a mere set of the cellulose nanofibers and the thermoplastic fluororesin, whereas a composite binder is a binder in which the cellulose nanofibers are present in a dispersed state in a thermoplastic fluororesin matrix contained the binder. For example, a binder in which cellulose nanofibers are contained inside a thermoplastic resin is the composite binder.

That is, in order to obtain a composite binder, a liquid in which cellulose nanofibers are dispersed in NMP is an essential material.

Since the cellulose nanofibers are dispersed in a liquid medium having -OH such as water and/or alcohols, a liquid in which cellulose nanofibers are dispersed in NMP must be produced. When water and/or alcohols is/are removed from the cellulose nanofibers dispersed liquid by heat treatment or filtration even once, cellulose nanofibers are irreversibly aggregated and never return to the original dispersed state. Therefore, even if NMP is added to the cellulose nanofibers from which the solvent is completely removed and is mixed therewith, the liquid in which cellulose nanofibers are dispersed in NMP is not obtained.

Therefore, the liquid medium must be replaced with NMP while maintaining the cellulose nanofibers dispersed in the liquid medium having -OH such as water and/or alcohols in a dispersed liquid state.

The liquid in which the cellulose nanofibers are dispersed in NMP can be produced through the following steps (B) and (C).

That is, the liquid in which the cellulose nanofibers are dispersed in NMP can be produced by a method, which contains: a step (B) in which, when a total of the cellulose nanofibers, the liquid medium having -OH, and NMP is taken as 100 mass%, mixing the cellulose nanofiber-dispersed liquid medium with the NMP so as to make a solid content of the

cellulose nanofibers is 0.1 mass% and more and 20 mass% and less, thereby obtaining a liquid containing the cellulose nanofibers, the liquid medium, and NMP, ; and a step (C) of increasing the concentration of NMP by evaporating the liquid medium while stirring the liquid containing the cellulose nanofibers, the liquid medium, and NMP.

Water is preferably removed by heating under reduced pressure in the above step (C). Specifically, the above step (C) is preferably a step of increasing the concentration of NMP by heating at 25°C or higher and 150°C or lower under pressure of 10 hPa or more and 900 hPa or less and evaporating the liquid medium. According to this method, the liquid medium can be efficiently removed, and a liquid in which cellulose nanofibers are dispersed in NMP having high purity is obtained. When the pressure is more than 900 hPa, removal of the liquid medium is difficult without increasing the heating temperature, and NMP is easily vaporized at the same time as the liquid medium. When the pressure is less than 10 hPa, NMP is easily vaporized even at room temperature (for example, 25°C), and a device required for pressure reduction also becomes large. The pressure is more preferably 50 hPa or more and 800 hPa or less, and still more preferably 100 hPa or more and 700 hPa or less. Within this pressure range, the liquid medium can be effectively removed by setting the temperature to 25°C or higher and 150°C or lower. The reason for setting the temperature to 150°C or lower is not only to prevent the vaporization of NMP but also to prevent yellowing (change in color) of the cellulose nanofibers and to prevent a decrease in flexibility and mechanical strength of the cellulose nanofibers. The reason for setting the temperature to 25°C or higher is to increase a removal speed of the liquid medium.

The method preferably contains a step (D) of irradiating an ultrasonic wave having an oscillation frequency of 10 kHz or more and 200 kHz or less and an amplitude of 1 μm or more and 200 μm or less to the liquid in which the cellulose nanofibers are dispersed in NMP after the step (C). The ultrasonic wave to be irradiated more preferably has an oscillation frequency of 15 kHz or more and 100 kHz or less and an amplitude of 10 μm or more and 100 μm or less.

This is because under such conditions, cellulose nanofibers are uniformly defibrated by cavitation shock waves generated by ultrasonic irradiation, and dispersibility and storage stability are improved.

The irradiation time of the ultrasonic wave is not particularly limited and is preferably 1 minute or more, and more preferably 3 minutes or more and 60 minutes or less.

When a total amount of solid contents of the cellulose nanofibers and the thermoplastic fluororesin is taken as 100 mass%, the binder preferably contains cellulose nanofibers in an amount of 5 mass% or more and 80 mass% or less and contains the thermoplastic fluororesin in an amount of 20 mass% or more and 95 mass% or less. According to this composition, it also functions as an electrode binder having excellent output characteristics. In addition, aggregation, sedimentation, and the like hardly occur in the production step of the slurry, and yield during electrode production is improved.

When a total amount of solid contents of the cellulose nanofibers and the thermoplastic fluororesin is taken as 100 mass%, by adjusting the amount of the cellulose nanofibers to 5 mass% or more and the amount of the thermoplastic fluororesin to 95 mass% or more, electrolyte solution swelling resistance is improved and cycle-life characteristics and output characteristics at high temperatures are improved. The reason is that the cellulose nanofibers are dispersed in a matrix of the thermoplastic fluororesin in the binder and the cellulose nanofibers prevent swelling of the thermoplastic fluororesin in the electrolytic solution. By adjusting the amount of the cellulose nanofibers to 80 mass% or less, and adjusting the amount of the thermoplastic fluororesin to 20 mass% or more, the cellulose nanofibers prevent the swelling of the electrode active substance layer although the thermoplastic fluororesin in the electrode binder absorbs the electrolytic solution at a high temperature. Therefore, it is possible to obtain an electrode binder by which the conductive network of the active substance layer is hardly destroyed, ion conductivity can be imparted to the binder, and output characteristics are improved. Therefore, when only the thermoplastic fluororesin is contained, although the thermoplastic fluororesin absorbs the electrolytic solution at a high temperature to impart ionic conductivity to the binder, the swelling of the electrode active substance layer cannot be prevented, and the conductive network of the electrode active substance layer is destroyed. Therefore, when the cellulose nanofibers are contained in an amount of 5 mass% or more, this situation is prevented. When only the cellulose nanofibers are contained, although the swelling of the electrode active substance layer at a high temperature can be prevented, ion conductivity is poor. Therefore, when the thermoplastic fluororesin to absorb an electrolytic solution is contained in an amount of 20 mass% or more, this situation is improved. It is more preferable that the cellulose nanofibers are contained in an amount of 10 mass% or more and 75 mass% or less, and the thermoplastic fluororesin is contained in an amount of 25 mass% or more and 90 mass% or less, and it is still more preferable that the cellulose nanofibers are contained in an amount of 20 mass% or more and 70 mass% or less, and the thermoplastic fluororesin is contained in an amount of 30 mass% or more and 80 mass% or less.

The above cellulose nanofibers preferably contain cellulose nanofibers that are subjected to polybasic acid semi-esterification (SA) to replace some of hydroxyl groups with carboxyl groups. When Carboxyl (-COOH) groups are present on surfaces of the cellulose nanofibers, a repulsive force can be induced between the cellulose nanofibers. According to this, it is possible to obtain an electrode binder that prevents swelling of the electrode active substance layer in an electrolytic solution having a temperature of 80°C or higher and has improved cycle-life characteristics and output characteristics at a high temperature. In addition, even if the proportion of the thermoplastic fluororesin in the binder may be reduced, aggregation, sedimentation, and the like hardly occur in the production step of the slurry, and yield during

electrode production is further improved.

The polybasic acid semi-esterification treatment is the treatment of semi-esterifying some of hydroxyl groups of the cellulose by a polybasic acid anhydride to introduce carboxyl groups to surfaces of cellulose by.

The step (A) of the polybasic acid semi-esterification treatment is preferably performed before the step (B). That is, in the polybasic acid semi-esterified cellulose nanofibers, it is preferred that the cellulose material is subjected to the polybasic acid semi-esterification treatment in advance. Specifically, it is preferred that the cellulose material (cellulose nanofiber precursor) as a starting material is mixed with polybasic acid anhydride at a temperature of 80°C or higher and 150°C or lower by a pressure kneader and an extrusion kneader having one or more screws, and some of hydroxyl groups on the surface of cellulose are semi-esterified by the polybasic acid anhydride to introduce carboxyl groups, and then the polybasic acid semi-esterified cellulose nanofibers are produced by the microfiberizing method described above. Before the step (B), the cellulose is subjected to the polybasic acid semi-esterification treatment by the step (A) to obtain cellulose nanofibers excellent in storage stability.

Cellulose nanofibers, which are subjected to ethylene oxide addition treatment or propylene oxide addition treatment as secondary treatment after the polybasic acid semi-esterification treatment, may be used.

As for the composite binder, a liquid in which the thermoplastic fluororesin is dissolved in NMP and cellulose nanofibers are dispersed is obtained by dissolving the thermoplastic fluororesin in a liquid in which cellulose nanofibers are dispersed in NMP. Alternatively, a liquid in which cellulose nanofibers are dispersed in NMP may be mixed with a thermoplastic fluororesin dissolved in NMP.

The liquid in which the thermoplastic fluororesin is dissolved in NMP and cellulose nanofibers are dispersed therein can be obtained by a step (E) of mixing the cellulose nanofibers in an amount of 5 mass% or more and 80 mass% or less with the thermoplastic fluororesin in an amount of 20 mass% or more and 95 mass% or less when a total amount of solid contents of the cellulose nanofibers and the thermoplastic fluororesin is taken as 100 mass%, and dissolving the thermoplastic fluororesin in NMP. The binder for the lithium ion battery can be thus produced.

Examples of the thermoplastic fluororesin include polyvinylidene fluoride (PVdF), a vinylidene fluoride copolymer, polytetrafluoroethylene (PTFE), polyvinyl fluoride, polytrifluoride ethylene, polyethylene trifluoride chloride, a vinylidene fluoride-ethylene trifluoride chloride copolymer, a vinylidene fluoride-tetrafluoroethylene copolymer, an ethylene tetrafluoride-propylene hexafluoride copolymer, and one kind or two or more kinds of these compounds may be used. In addition, these resins may be homopolymers, copolymers, and terpolymers. Among them, the binder for the lithium ion battery preferably contains polyvinylidene fluoride (PVdF) from the viewpoint of high ion conductivity of an electrode and excellent oxidation resistance characteristics and reduction resistance characteristics.

PVdF preferably has an average molecular weight (number average molecular weight: Mn) of 100,000 or more and 5,000,000 or less from the viewpoint of retaining the electrolytic solution easily and an excellent binding property with a current collector. In the case where the average molecular weight is less than 100,000, the binding property with a current collector is insufficient, and further viscosity of a binder decreases. Thus, it is difficult to increase the application amount per unit area, and to obtain an electrode having a high basis-weight capacity. In the case where the average molecular weight is more than 5,000,000, PVdF hardly dissolves in NMP, and further the viscosity of a binder increases. Thus, the heat generation becomes severe when the slurry is mixed, and if the cooling of the slurry cannot keep up (the temperature cannot be kept at 80°C or lower), the electrode slurry tends to gel. The average molecular weight of PVdF is more preferably 110,000 or more and 3,000,000 or less, and still more preferably 120,000 or more and 1,500,000 or less.

PVdF is usually obtained by suspension polymerization or emulsion polymerization of 1,1-difluoroethylene, in a suitable reaction medium, with an additive such as a polymerization initiator, a suspending agent, or an emulsifying agent. The molecular weight of PVdF can be adjusted by using known polymerization degree adjusters, chain transfer agents, or the like.

In the present invention, the number average molecular weight means a result measured by gel permeation chromatography which is widely used as a measurement method of molecular weight of a polymer. The value of the number average molecular weight may be measured by an ultraviolet detector using NMP, in which 0.01 mol/L of lithium bromide is dissolved, in an HLC8020 device manufactured by Tosoh Corporation.

The above binder is a binder in which the thermoplastic fluororesin is dissolved in NMP and the cellulose nanofibers are dispersed in NMP, and when a total mass of the cellulose nanofibers, the thermoplastic fluororesin, and NMP in the binder is taken as 100 mass%, a total solid content of the cellulose nanofibers and the thermoplastic fluororesin is preferably 3 mass% or more and 30 mass% or less. Here, it is preferable that NMP has a water content as small as possible in order to avoid contact between a Li-containing active substance and water as much as possible. Specifically, the content of water is preferably 1000 ppm or less, preferably 500 ppm or less, and more preferably 100 ppm or less.

According to this composition, gelation hardly occurs when a slurry is produced by adding a Li-containing active substance. In addition, aggregation or sedimentation hardly occurs in a production step of the slurry, coatability of an electrode are also excellent, and the yield during electrode production is improved.

When the binder thus produced is deposited and formed on a current collector as an electrode binder for a lithium ion battery, the binder can be made to function well as a positive electrode or a negative electrode for a lithium ion battery.

Note that the binder may be used as an electrode binder for a reference electrode. In addition, the binder may be used as a binder for an electrode contained in a power storage device such as an electric double-layer capacitor or an ion capacitor, a sodium-ion battery, a magnesium ion battery, a calcium ion battery, an alkaline secondary battery, and a primary battery.

The electrode includes, for example, an active substance and a conductive aid in addition to the binder in the present invention.

The electrode can be formed, for example, by applying an electrode mixture slurry, which is obtained by adding NMP or the like as a slurry solvent to a mixture (electrode mixture) containing an active substance, a conductive aid, a binder, and the like, and kneading them sufficiently, to a surface of a current collector, and drying the electrode mixture slurry while being controlled to have a desired thickness and density. In the case of producing a lithium ion battery including the electrode, a stacked or wound lithium ion battery may be assembled by battery elements (counter electrode, separator, electrolytic solution, or the like) of a known lithium secondary battery according to a conventional method.

The conductive aid for an electrode is not particularly limited as long as the conductive aid has conductivity (electrical conductivity), and metal, carbon materials, conductive polymers, conductive glass, and the like can be used. Among them, the carbon materials are preferred because an addition of small amount of the carbon materials is expected to improve the conductivity of the electrode active substance. Specific examples thereof include acetylene black (AB), ketjen black (KB), furnace black (FB), thermal black, lamp black, channel black, roller black, disk black, carbon black (CB), carbon fiber (for example, a vapor grown carbon fiber named VGCF which is a registered trademark), carbon nanotube (CNT), carbon nano horn, graphite, graphene, glassy carbon, and amorphous carbon, and one kind or two or more kinds of these compounds may be used.

When a total amount of the active substance, the binder, the conductive aid contained in the electrode is taken as 100 mass%, the content of the conductive aid is preferably 0 mass% to 20 mass%. That is, the conductive aid is contained depending on necessity. When the amount of the conductive aid is more than 20 mass%, the proportion of the active substance of the battery is low. If it exceeds 20% by mass, the ratio of the active material in the battery is small, so that the electrode capacity density tends to be low.

The electrode binder is not particularly limited as long as it contains the binder of the present invention. A binder that may be contained in addition to the binder in the present invention includes binders for a general electrode, for example, materials such as polyimide (PI), polyamide, polyamide imide, aramid, ethylene-vinyl acetate copolymer (EVA), styrene-ethylene-butylene-styrene copolymer (SEBS), polyvinyl butyral (PVB), ethylene vinyl alcohol, polyethylene (PE), polypropylene (PP), epoxy resin, polyethylene terephthalate (PET), polybutylene terephthalate (PBT), nylon, vinyl chloride, silicone rubber, nitrile rubber, cyanoacrylate, urea resin, melamine resin, phenolic resin, polyvinyl pyrrolidone, vinyl acetate, polystyrene, chloropropylene, resorcinol resin, polyaromatic, modified silicone, polybutene, butyl rubber, and 2-propenoic acid, and one kind of these materials may be contained alone or two or more kinds thereof may be contained in combination.

In addition, there is no problem even if the binder contains inorganic particles such as ceramics and carbon. In that case, the ceramics or carbon has a particle diameter of preferably in a range of 0.01 μm to 20 μm, and more preferably in a range of 0.05 μm to 10 μm. In the present invention, the particle diameter means a volume-based median diameter (D50) in a laser diffraction/scattering particle size distribution measuring method, and the same applies hereinafter.

When a total amount of the active substance, the binder, and the conductive aid contained in the electrode is taken as 100 mass%, the content of the binder is preferably 0.1 mass% or more and 60 mass% or less, more preferably 0.5 mass% or more and 30 mass% or less, and even more preferably 1 mass% or more and 15 mass% or less.

When the content of the binder is less than 0.1 mass%, the mechanical strength of the electrode is low, so that the active substance is likely to fall off, and the cycle-life characteristics of the battery may deteriorate. On the other hand, when the content of the binder is more than 60 mass%, the ionic conductivity is low, the electrical resistance is high, and the proportion of the active substance of the battery is small. Therefore, the electrode capacity density easily goes low.

The current collector for the electrode is not particularly limited as long as it is a material having conductivity and capable of supplying currents to the held active substance. For example, conductive substances such as C, Ti, Cr, Ni, Cu, Mo, Ru, Rh, Ta, W, Os, Ir, Pt, Al, and Au, and alloys containing two or more kinds of these conductive substances (e.g., stainless steel) may be used. When materials other than the above conductive substances is used, for example, a multilayer structure of different metals such as iron coated with Al, Ni or C may be used.

From the viewpoint of high conductivity and good stability in an electrolytic solution, the current collector is preferably C, Ti, Cr, Au, Fe, Cu, Ni, Al, and stainless steel. Further, from the viewpoint of the cost of materials, C, Cu, Ni, Al, and stainless steel are preferred. When iron is used as a current collecting substrate, the iron is preferably coated with Ni, Cu, Al, and C to prevent oxidation of a surface of the current collecting base.

The shape of the current collector is not particularly limited and may be a foil-shaped substrate, a three-dimensional substrate, or the like. Further, these current collectors may be a current collector having a through hole. Among them, the three-dimensional substrate is preferred since it can increase the packing density of the active substance. Examples of the three-dimensional substrate include a mesh, a woven fabric, a non-woven fabric, an embossed body, an expanding body, or a foam. Among them, the shape of the current collecting substrate is preferably

the embossed body or the foam due to good output characteristics.

As described in Patent Literature (Japanese Patent No. 6149147), in this electrode, an inorganic skeleton forming agent may be applied to the active substance layer or the like so that the inorganic skeleton forming agent permeates the active substance layer. Because of this, even when an alloy active substance having a severe expansion and contraction of the active substance at the time of charge and discharge is used, the expansion and contraction are allowed, and the occurrence of wrinkles, cracks, and the like of the current collector of the electrode can be prevented.

When the inorganic skeleton forming agent is applied to the active substance layer, t the skeleton forming agent per unit area of the electrode coated on one side is preferably 0.001 $mg/cm^2$ or more and 10 $mg/cm^2$ or less, and more preferably 0.01 $mg/cm^2$ or more and 3 $mg/cm^2$ or less. As for an electrode coated on both sides or an electrode of a three-dimensional substrate filled with an active substance layer, the amount of the skeleton forming agent per unit area of the electrode is 0.002 $mg/cm^2$ or more and 20 $mg/cm^2$ or less, and more preferably 0.02 $mg/cm^2$ or more and 6 $mg/cm^2$ or less.

The inorganic skeleton forming agent may be silicates, phosphates, sols, cement, or the like. Examples thereof include inorganic materials such as lithium silicate, sodium silicate, potassium silicate, cesium silicate, guanidine silicate, ammonium silicate, fluorosilicate, borate, lithium aluminates, sodium aluminates, potassium aluminates, aluminosilicate, lithium aluminate, sodium aluminate, potassium aluminate, poly aluminum chloride, aluminum polysulphate, aluminum polysulfate silicate, aluminum sulfate, aluminum nitrate, ammonium alum, lithium alum, sodium alum, potassium alum, chrome alum, iron alum, manganese alum, nickel ammonium sulfate, diatomaceous earth, polyzirconoxane, polytantaloxane, mullite, white carbon, silica sol, colloidal silica, fumed silica, alumina sol, colloidal alumina, fumed alumina, zirconia sol, colloidal zirconia, fumed zirconia, magnesia sol, colloidal magnesia, fumed magnesia, calcia sol, colloidal calcia, fumed calcia, titania sol, colloidal titania, fumed titania, zeolite, silicoaluminophosphate zeolite, sepiolite, montmorinite, kaolin, saponite, aluminum phosphates, magnesium phosphates, calcium phosphates, iron phosphates, copper phosphates, zinc phosphates, titanium phosphates, manganese phosphates, barium phosphates, tin phosphates, low-melting-point glass, plaster, gypsum, magnesium cement, lisage cement, portland cement, blast furnace cement, fly ash cement, silica cement, phosphate cement, concrete, and solid electrolytes, and one kind of these inorganic materials may be used alone, or two or more kinds thereof may be used in combination.

When a total solid content of the active substance, the conductive aid, and the binder and the skeleton forming agent in the electrode is taken as 100 mass%, the content of the skeleton forming agent is preferably 0.01 mass% or more and 50 mass% or less, more preferably 0.1 mass% or more and 30 mass% or less, and still more preferably 0.2 mass% or more and 20 mass% or less.

In the electrode slurry containing the binder of the present invention, gelation of the slurry hardly occurs even if a Li-containing active substance is contained. Therefore, the active substance contained in the electrode is not particularly limited as long as it is an active substance that can absorb and release lithium ions in lithium ion batteries.

A known electrode, which contains, for example, alkali metal transition metal oxides, vanadiums, sulfurs, solid solutions (lithium excess, sodium excess, potassium excess), carbons, and organic materials as a positive electrode active substance, is used. A known electrode, which contains, for example, graphite, hard carbon, soft carbon, lithium titanate, alloy materials, and conversion materials as a negative electrode active substance, is used.

Examples of the alloy-based material include Mg, Al, Si, Ca, Mn, Fe, Co, Zn, Ge, Ag, In, Sn, Sb, Pb, oxides such as SiO, SnO, $SnO_2$, and $SnSOS_4$, chalcogenides such as SnS, $SnS_2$, and SnSe, and halides such as $SnF_2$, $SnCl_2$, $SnI_2$, and $SnI_4$.

The Li-containing active substance herein refers to a compound including at least lithium (Li), transition metal (M) and oxygen, and examples thereof include $LiCoO_2$, $LiNiO_2$, $LiMnO_2$, NCM, NCA, $LiMn_2O_4$, $LiFePO_4$, $Li_4Ti_5O_{12}$, $Li_2MnO_3$-$LiMO_2$ (M = Ni, Co, Mn, Ti), and $Li_2MSiO_4$ (Fe, Ni, Co, Mn).

An electrode is obtained by mixing the active substance, the binder, and the conductive aid added as necessary to make a slurry, coating or filling the slurry to a current collector, temporarily drying, rolling, then heating at 60°C or higher and 280°C or lower. The temporary drying is not particularly limited as long as the solvent in the slurry can be removed by volatilization, and examples thereof include a method of heating under an atmosphere at a temperature of 50°C or higher and 200°C or lower in the air.

In addition, when the heating after rolling is performed at 60°C or higher and 280°C or lower, it can remove solvent and moisture from the slurry as much as possible and can prevent carbonization of the binder (especially carbonization of cellulose nanofibers). The heating is performed preferably at 100°C or higher and 250°C or lower, more preferably at 105°C or higher and 200°C or lower, and still more preferably at 110°C or higher and 180°C or lower.

In addition, the heating can be performed by keeping the heating time for 0.5 hours to 100 hours. The atmosphere of the heating may be in the air, but it is preferable to perform the heating under a non-oxidizing atmosphere to prevent oxidation of the current collector. The non-oxidizing atmosphere means an environment in which the amount of oxygen gas is smaller than that in the air. The non-oxidizing atmosphere may be, for example, depressurized environment, vacuum environment, hydrogen gas atmosphere, nitrogen gas atmosphere, and rare gas atmosphere.

The electrode includes a negative electrode and a positive electrode, and the negative electrode and the positive electrode are similar are produced by similar production methods except that current collectors and active substances are

different.

In the case of an electrode including a material with an irreversible capacity, it is preferable that the irreversible capacity is canceled by lithium doping. The method of lithium doping is not particularly limited, and examples thereof include: (i) a method of doping lithium into an electrode active substance by attaching metallic lithium to a portion without an active substance layer on an electrode current collector and injecting a liquid to form a local cell ; (ii) a method of doping lithium into an electrode active substance by attaching metallic lithium to an active substance layer of an electrode current collector and injecting liquids to cause short circuit ; (iii) a method of doping lithium into an electrode active substance by depositing metallic lithium on an active substance layer by evaporation or sputtering and performing a solid-phase reaction; (iv) a method of electrochemically doping lithium to an electrode in an electrolytic solution prior to constitute a battery; and (v) a method of doping lithium into an active substance by adding metallic lithium to active substance powders and mixing thereof.

The binder of the present invention can also be applied to a surface of a separator. By doing so, the separator has high strength, excellent heat resistance, excellent adhesiveness with an electrode, and improved cycle-life characteristics. The binder of the present invention may be applied to one or both surfaces of a separator substrate (raw material), or may be filled in the separator substrate. Here, as the separator substrate, those generally provided for a lithium ion battery can be used. That is, a thickness of the separator substrate is not particularly limited as long as the separator has a thickness in a range of 1 $\mu$m to 50 $\mu$m. The thickness in the present invention is a value measured by a micrometer (manufactured by Mitutoyo Corporation, high precision digimatic micrometer MDH-25M, measuring force 7 N to 9 N, and measuring surface size $\varphi$ 3.2 mm). However, a thickness less than 1 $\mu$m may be a value measured by cutting an object with a cross cutter and observing a cross-section thereof by SEM. Porosity (porosity) of the separator substrate is not particularly limited as long as is the separator has a porosity in a range of 20% to 90%. Here, the porosity is a value calculated by the following formula from the apparent density of the separator and true density of solid content of a constituent material.

Porosity (%) = 100 - (apparent density of separator/true density of solid content of material) $\times$ 100

The pore diameter of the separator substrate is not particularly limited as long as the separator substrate has pore diameter within a range of 0.001 $\mu$m to 10 $\mu$m.

Here, the pore diameter means a 50% permeation flow rate diameter by measuring hexane vapor permeation performances with He gas as carrier gas by a nanopore diameter distribution measurement device (manufactured by Seika Corporation, Nano Perm Porometer).

A material of the separator substrate is not particularly limited as long as the material does not dissolve in a solvent of the electrolytic solution and has excellent oxidation resistance and reduction resistance. Examples thereof include resin materials such as polypropylene (PP), polyethylene (PE), polyethylene terephthalate (PET), polyimide (PI), aramid, polyamide imide, polycarbonate, polyacetal, polyphenylene ether, polyetherketone, polysulfone, polyester, polyacrylonitrile (PAN), and polytetrafluoroethylene (PTFE), and a resin material containing PP or PE is preferred from the viewpoint of presence or absence of shutdown characteristics of the separator. In general, PP, PE, and PET are excellent in water repellency, and thus the substrate repels a coating layer in the case of a binder with water as solvent (aqueous binder). Accordingly, it is difficult to form a uniform surface coating layer. In addition, polyolefin-based resins such as PP and PE have almost no polar groups for chemical bonding and have low surface free energy, and thus the adhesive force is weak and the binder is easily peeled off even if the binder is the nonaqueous fluororesin. On the other hand, since the binder of the present invention is nonaqueous, there is no repelling due to water described above. The fluororesin contained in the binder of the present invention is not expected to have adhesiveness with the polyolefin-based resins. However, the binder contains cellulose nanofibers, so that the cellulose nanofibers penetrate into pores and fine irregularities present on a surface of the substrate and are subjected to curing. Accordingly, the binder can physically adhere to the substrate. Therefore, the binder of the present invention is different from the aqueous binder and from the mere fluororesin of the related art, and adhesive strength with the separator is improved.

The surface coating layer of the binder has a thickness of preferably 0.01 $\mu$m or more and 3 $\mu$m or less on one surface from the viewpoint of excellent heat resistance and adhesiveness with the electrode. The coating mass of the surface coating layer per unit area is preferably in a range of 0.001 g/m$^2$ to 5 g/m$^2$ on one side. In the case of double-sided coating and filling with the non-woven fabric, the basis weight can be set as two times that of the one-sided coating.

Examples of a method of surface coating of the binder include a method of impregnating a separator substrate in a tank with the binder of the present invention, a method of dropping or applying the binder of the present invention to a surface of the separator substrate, spray coating, screen printing, a curtain method, spin coating, gravure coating, wire coating, and die coating. The binder applied to the surface of the separator substrate penetrates into inside of holes of the separator and physically adheres to the separator substrate due to the anchor effects. Then, the separator body is dried by hot air at 60°C to 160°C, heating, or the like, and the solvent of the binder is vaporized. Accordingly, the binder is formed on

the surface of the separator substrate.

The shape of the separator substrate is, for example, microporous film, woven fabric, non-woven fabric, and green compact, and is not particularly limited.

The separator may be a separator in which a ceramics (inorganic filler) layer is coated or filled on the separator substrate so as not to meltdown due to local heat generation during a short circuit. In that case, the ceramics layer is at least a porous layer formed of the binder of the present invention and a ceramic powder (inorganic filler) and allows gas or liquid to pass therethrough. The material coated on the surface of the separator substrate has an effect of improving the heat resistance of the separator and improving the liquid keeping property of the electrolytic solution even if it does not contain ceramic. The material contains the ceramic powder, so that not only the heat resistance and the liquid keeping property of the electrolytic solution are further improved, but also input and output characteristics of the battery are improved. The ceramic powder is not particularly limited as long as it does not dissolve in a solvent of the electrolytic solution and is excellent in oxidation resistance and reduction resistance. Examples of the ceramic powder include oxides or hydroxides, nitrides, and carbides such as silica ($SiO_2$), alumina ($Al_2O_3$), magnesia (MgO), calcia (CaO), zirconia (ZrO), yttria ($Y_2O_3$), titania ($TiO_2$), aluminum hydroxide oxide (AlOOH), aluminum hydroxide ($Al(OH)_3$), magnesium hydroxide ($Mg(OH)_2$), barium titanate ($BaTiO_3$), aluminum nitride (AlN), silicon nitride ($Si_3N_4$), calcium carbonate ($CaCO_3$), magnesium carbonate ($MgCO_3$), boron nitride (BN), silicon carbide (SiC), lithium metatitanate ($Li_2TiO_3$), lithium titanate ($Li_2Ti_5O_{12}$), and trilithium phosphate ($Li_3PO_4$). If the particle diameter of the ceramic powder is too small, the Gurley value tends to increase, and if the particle diameter is too large, the strength of the ceramic layer tends to decrease. Therefore, the ceramic powder has the particle diameter of preferably in a range of 0.001 $\mu$m to 3 $\mu$m, and more preferably in a range of 0.01 $\mu$m to 1 $\mu$m. The shape of the ceramic powder is not particularly limited and may be a spherical shape, an elliptical shape, a faceted shape, a belt shape, a fibrous shape, a flake shape, a donut shape, or a hollow shape. The ceramics layer is not particularly limited as long as it contains the binder of the present invention in an amount of 0.1 mass% or more when the binder of the present invention and the ceramic powder are taken as 100 mass%, and the content of the binder of the present invention is preferably 1 mass% or more, and more preferably 2 mass% or more from the viewpoint of a binding property with the separator substrate. From the viewpoint of the input and output characteristics of the battery, the content of the binder of the present invention is preferably 90 mass% or less, and more preferably 80 mass% or less. The ceramic layer has a porosity of preferably in a range of 20% to 80%, and more preferably in a range of 50% to 70%. By controlling the porosity within this range, even if the volume of the electrode changes during charging and discharging of the battery, the separator can easily follow the change of the electrode, making it difficult for the separator to wear and the battery safety over the medium to long term increase. The ceramic layer has a thickness of preferably 0.5 $\mu$m or more on one side from the viewpoint of excellent heat resistance and adhesiveness with the electrode. The coating mass of the ceramic layer per unit area is different depending on materials to be used and is preferably in a range of 0.1 g/m$^2$ to 60 g/m$^2$. A method of coating or filling the ceramic layer is similar to the surface coating of the binder described above.

In the coating of the binder or the ceramic layer, the Gurley value of the separator is preferably controlled to 5000 sec/100 mL or less from the viewpoint of excellent lithium dendrite resistance of the separator. The same applies to the filled separator. The Gurley value in the present invention refers to an index for the permeability of a separator and is determined according to a standard of JIS P8117. In general, the Gurley value can be reduced by increasing the pore diameter of the separator substrate or increasing the number of pores. In addition, the Gurley value can also be reduced by reducing the thickness of the ceramic layer and increasing the particle diameter of the ceramic. Excellent input and output characteristics can be obtained by a separator with a small Gurley value, and when the Gurley value is more than 5000 sec/100 mL, the probability of short circuit with lithium dendrite generated by overcharge increases. On the other hand, the Gurley value of the separator is preferably controlled to 50 sec/100 mL or more from the viewpoint of the excellent input and output characteristics of the battery. Therefore, the Gurley value of the separator is preferably in a range of 50 sec/100 mL to 5000 sec/100 mL, and more preferably in a range of 70 sec/100 mL to 2000 sec/100 mL.

Coating the separator with the binder of the present invention is expected to prevent short circuit of the battery caused by meltdown of the separator due to the local heat generation during the short circuit. In addition, when the battery is charged, the presence of the binder of the present invention on a surface of a separator on a positive electrode side can prevent direct contact between a separator substrate and a positive electrode and can prevent oxidation of the separator substrate. Accordingly, self-discharge of the battery is prevented. In addition, the heat resistance of the separator is improved, and hence the safety regarding nail penetration or overcharge is improved.

For example, in the case of a battery containing the above-described electrode, a battery structure in which the positive electrode and the negative electrode are joined via a separator and are sealed while being immersed in an electrolytic solution can be conceived. The structure of the battery is not limited to this example and can be applied to existing battery configurations or structures such as stacked batteries and wound batteries.

The battery may be a lithium ion battery in which at least one of the positive electrode and negative electrode contains the binder containing cellulose nanofibers in the thermoplastic fluororesin.

The electrolyte contained in the battery may be any liquid or solid capable of moving lithium ions from the positive electrode to the negative electrode or from the negative electrode to the positive electrode, and it may be the same

electrolyte as that contained in a known lithium ion battery. Examples thereof include an electrolytic solution, a gel electrolyte, a solid electrolyte, an ionic liquid, and a molten salt. Here, the electrolytic solution refers to a liquid in a state where an electrolyte is dissolved in a solvent.

Since the electrolytic solution needs to contain lithium ions, the electrolytic solution is not particularly limited as long as it is contained in a lithium ion battery, and includes an electrolyte salt and an electrolyte solvent.

The electrolyte salt needs to contain lithium ions. The electrolyte salt is not particularly limited as long as it is contained in a lithium ion battery, and lithium salts are preferred. At least one or more selected from the group consisting of lithium hexafluorophosphate ($LiPF_6$), lithium perchlorate ($LiClO_4$), lithium tetrafluoroborate ($LiBF_4$), lithium trifluoromethanesulfonate ($LiCF_3SO_4$), lithium bistrifluoromethanesulfonylimide ($LiN(SO_2CF_3)_2$), lithium bispentafluoroethanesulfonylimide ($LiN(SO_2C_2F_5)_2$), and lithium bis oxalate borate ($LiBC_4O_8$) can be contained as the lithium salt. Among the above lithium salts, $LiPF_6$ is particularly preferred since $LiPF_6$ has a high electronegativity and is easily ionized. If the electrolytic solution contains $LiPF_6$, the charge and discharge cycle characteristics are excellent, and the charge and discharge capacity of the secondary battery can be improved.

The solvent of the electrolyte is not particularly limited as long as it is contained in a lithium ion battery, and to the solvent can contain, for example, at least one selected from the group consisting of propylene carbonate (PC), ethylene carbonate (EC), dimethyl carbonate (DMC), diethyl carbonate (DEC), ethyl methyl carbonate (EMC), diphenyl carbonate, γ-butyrolactone (GBL), γ-valerolactone, methyl formate (MF), 2-methyltetrahydrofuran, 1,3-dioxolan, 4-methyl-1,3-dioxolan, dimethoxyethane (DME), 1,2-diethoxyethane, diethyl ether, sulfolane, tetrahydrofuran (THF), methylsulfolane, nitromethane, N,N-dimethylformamide, dimethyl sulfoxide, vinylene carbonate (VC), vinyl ethylene carbonate (EVC), fluoroethylene carbonate (FEC), and ethylene sulfite (ES), and among them, it can contain at least one of PC, EC, DMC, DEC, and EMC. Particularly, mixtures of cyclic carbonates such as EC and PC described above and chain carbonates such as DMC, DEC, and EMC are preferred. A mixing ratio of the cyclic carbonates and the chain carbonates can be optionally adjusted within a range of 10% by volume to 90% by volume in both the cyclic carbonates and the chain carbonates.

Among them, a solvent of an electrolyte containing VC or ECV, FEC, and ES is more preferred. The content of VC or ECV, FEC, and ES is preferably 0.1 mass% to 20 mass%, and more preferably 0.2 mass% to 10 mass% when the electrolytic solution (total amount of electrolyte and solvent) is taken as 100 mass%.

A concentration of the lithium salt in the electrolytic solution is preferably 0.5 mol/L to 2.5 mol/L, and more preferably 0.8 mol/L to 1.6 mol/L.

Particularly, the electrolytic solution preferably contains $LiPF_6$ as the electrolyte salts and an electrolyte solvent of the electrolyte solution contains aprotic cyclic carbonates and aprotic chain carbonates. When a battery including the electrolytic solution having this composition and the electrode containing the binder of the present invention is heated to a temperature of 50°C or higher, the thermoplastic fluororesin for the binder contained in the electrode absorbs lithium hexafluorophosphate and aprotic carbonates to form a polymer gel having excellent ion conductivity .

The electrode and the separator physically contacting the electrode can also be integrated by this polymer gel. With the integration, the adhesion strength between the electrode and the separator increases, and the positional deviation between the separator and the electrode due to external factors such as vibration or shock can be effectively prevented, contributing to improvements in the safety of the battery. When the cellulose nanofibers are not contained in the binder, the thermoplastic fluororesin gels by increasing the temperature, and at the same time, the electrode active substance layer also swells and the conductive network is destroyed. Therefore, the resistance of the electrode increases. Once the thermoplastic fluororesin swells in the electrolytic solution, the electrode never returns to the original state. That is, the thermoplastic fluororesin is gelled while cellulose nanofibers in the binder preventing swelling of the electrode, the electrode is adhesively joined to the separator via a binder while preventing an increase in electrode resistance, so that a battery in which the separator and the electrode are integrated can be produced.

The term "integration" in the present invention refers to a state where the electrode and the separator, which have been originally separated battery members, adhere to each other and are fixed to each other due to heat treatment, and difficult to easily peel off. More specifically, the term "integration" refers to a state where when the electrode and the separator are subjected to a peeling test at an angle of 180 degrees according to standards of JIS Z 0237, the adhesive force is 0.01 N/25 mm or more, and when peeling is performed, the separator has a mass fluctuation of 0.1 $mg/cm^2$ or more per unit area, or the separator is stretched or cut and destroyed. The mass fluctuation of the separator means a phenomenon in which a peeled member (an electrode active substance layer or a separator substrate, a separator coating layer) is attached to the opposite side to cause a change in mass.

The battery may be a lithium ion battery in which at least one of the positive electrode and negative electrode contains an electrode with the binder containing cellulose nanofibers in the thermoplastic fluororesin.

The battery is produced by a step (F) in which an electrode group stacked or wound with a separator interposed between a positive electrode and a negative electrode is sealed in a battery case together with an electrolytic solution containing lithium hexafluorophosphate and aprotic carbonates, then heating the battery case to raise a temperature thereof to 50°C or higher and 120°C or lower, and pressure is applied from an outside of the battery case perpendicularly to

an extension direction of the electrode, thereby integrating the separator with the electrode including a binder containing cellulose nanofibers in the thermoplastic fluororesin. More preferably, the temperature of the battery case is 55°C or higher and 95°C or lower.

The temperature of the battery case is set to 50°C or higher, so that the binder contained in the electrode gels by absorbing an electrolytic solution and ionic conductivity of the electrode is improved. When the temperature is higher than 120°C, the electrolytic solution vaporizes and the inside of the battery easily contains gas. In addition, when the separator contains a polyolefin-based resin, the polyolefin-based resin softens, and the risk of causing a short circuit of the battery is increased.

By applying the pressure from the outside of the battery case perpendicularly to the extension direction of the electrode, the electrode and the separator easily join to each other adhesively.

The pressure differs depending on battery size, the number of stacked electrodes, or the number of windings, so that the pressure is not particularly limited, and for example, a pressure of 0.1 Pa or more may be maintained for 10 seconds or more.

In the above step (F), the battery may be in a charged state or a discharged state.

The lithium ion battery obtained in this manner prevents swelling of the electrode active substance layer due to an electrolytic solution even in an environment having a temperature of 60°C or higher, and has improved cycle-life characteristics and output characteristics at a high temperature. In addition, the battery has good high-temperature storage characteristics and good productivity. Therefore, by taking advantage of such characteristics, the lithium ion battery of the present invention has applications such as an information and communication equipment such as a mobile phone, a smartphone and a tablet terminal, an automotive power supply of an electric vehicle (EV), a plug-in hybrid electric vehicle (PHEV), hybrid electric vehicle (HEV), and idling-stop vehicle, home backup power supplies, and large power storage systems such as power storage of natural energy and load leveling, and can be widely applied to the same applications as various applications of lithium ion batteries known in the related art.

## ADVANTAGEOUS EFFECTS OF INVENTION

When the binder of the present invention is contained in an electrode of a lithium ion battery, the binder hardly swells due to absorption of an electrolytic solution in high temperature, and has excellent ionic conductivity. In addition, the binder is less likely to cause gelation of a slurry even if a Li-containing active substance is contained.

## BRIEF DESCRIPTION OF DRAWINGS

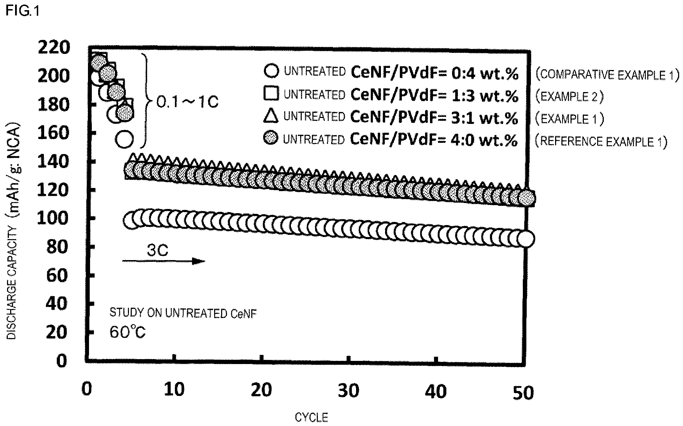

Fig. 1 is a graph showing a comparison between batteries (Example 1, Example 2, Reference Example 1) that include an electrode containing a binder material A as an electrode binder in Examples, and a battery (Comparative Example 1)which that includes an electrode containing only a binder material G as an electrode binder.

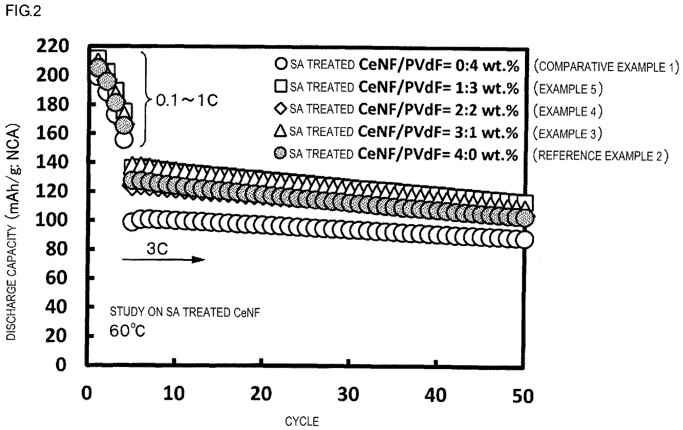

Fig. 2 is a graph showing a comparison between batteries (Examples 3 to 5, and Reference Example 2) that include an electrode containing a binder material B as an electrode binder in Examples, and a battery (Comparative Example 1), which includes an electrode containing only a binder material G as an electrode binder.

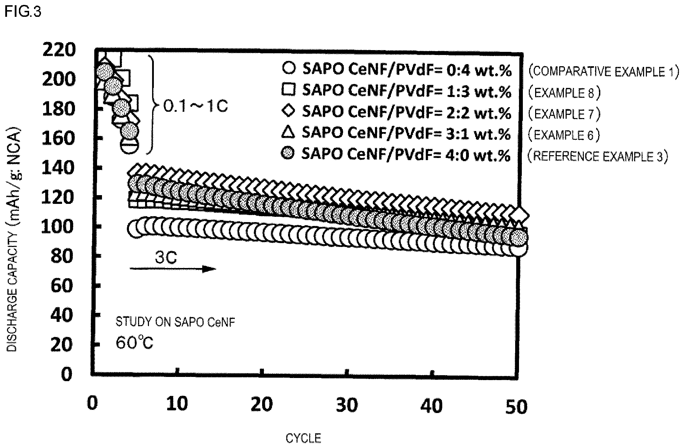

Fig. 3 is a graph showing a comparison between batteries (Examples 6 to 8, and Reference Example 3) that include an electrode containing a binder material C as an electrode binder in Examples, and a battery (Comparative Example 1) that includes an electrode containing only a binder material G as an electrode binder.

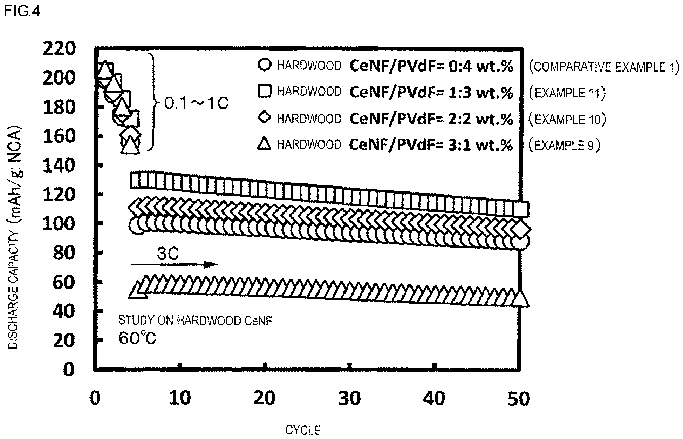

Fig. 4 is a graph showing a comparison between batteries (Examples 9 to 11) that include an electrode containing a binder material D as an electrode binder in Examples, and a battery (Comparative Example 1) that includes an electrode containing only a binder material G as an electrode binder.

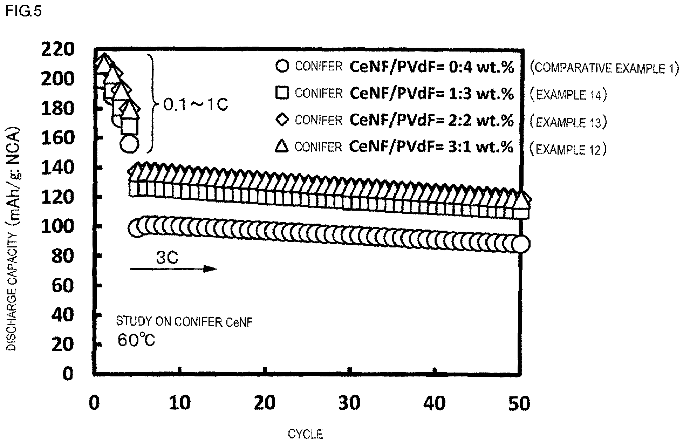

Fig. 5 is a graph showing a comparison between batteries (Examples 12 to 14) that include an electrode containing a binder material E as an electrode binder in Examples, and a battery (Comparative Example 1) that includes an electrode containing only a binder material G as an electrode binder.

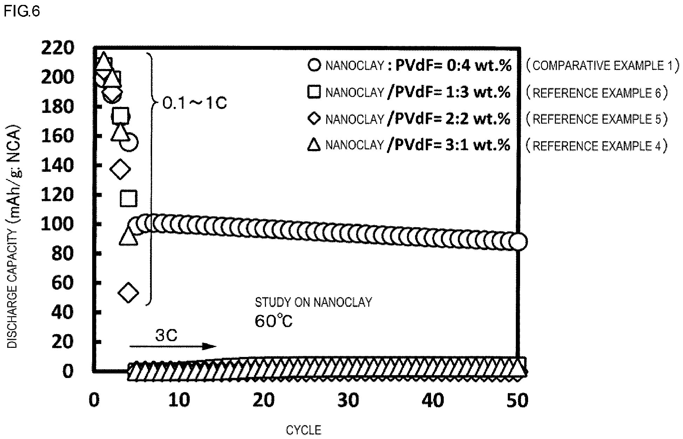

Fig. 6 is a graph showing a comparison between batteries (Reference Examples 4 to 6) that include an electrode containing a binder material F as an electrode binder in Examples, and a battery (Comparative Example 1) that includes an electrode containing only a binder material G as an electrode binder.

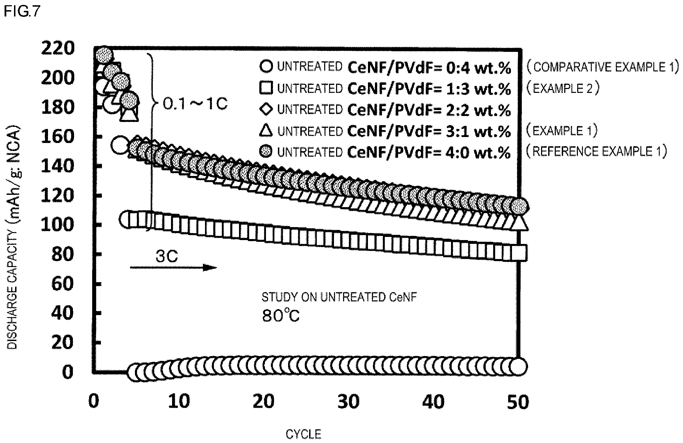

Fig. 7 is a graph showing a comparison between batteries (Example 1, Example 2, Reference Example 1) that include an electrode containing a binder material A as an electrode binder in Examples, and a battery (Comparative Example 1) that includes an electrode containing only a binder material G as an electrode binder.

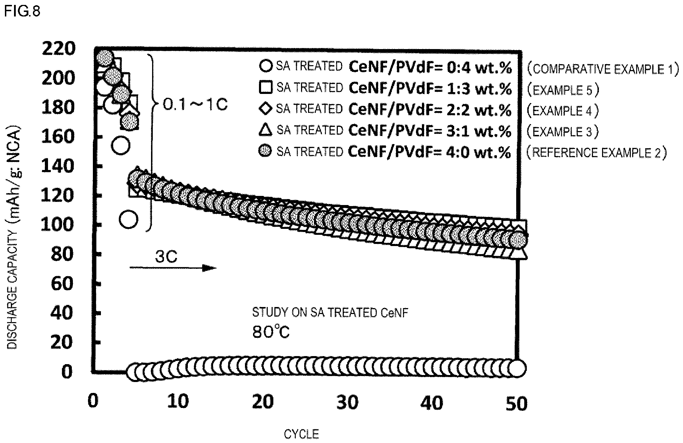

Fig. 8 is a graph showing a comparison between batteries (Examples 3 to 5, and Reference Example 2) that include an electrode containing a binder material B as an electrode binder in Examples, and a battery (Comparative Example 1) that includes an electrode containing only a binder material G as an electrode binder.

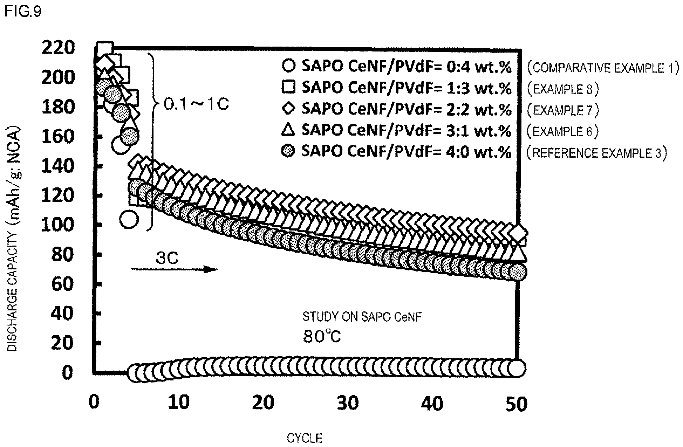

Fig. 9 is a graph showing a comparison between batteries (Examples 6 to 8, and Reference Example 3) that include an electrode containing a binder material C as an electrode binder in Examples, and a battery (Comparative Example 1) that includes an electrode containing only a binder material G as an electrode binder.

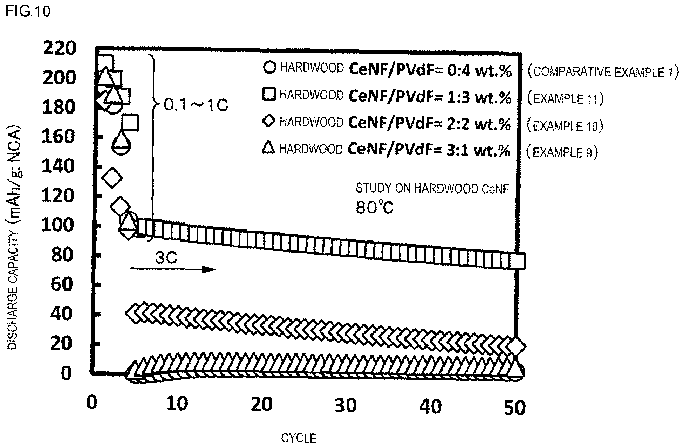

Fig. 10 is a graph showing a comparison between batteries (Examples 9 to 11) that include an electrode containing a binder material D as an electrode binder in Examples, and a battery (Comparative Example 1) that includes an electrode containing only a binder material G as an electrode binder.

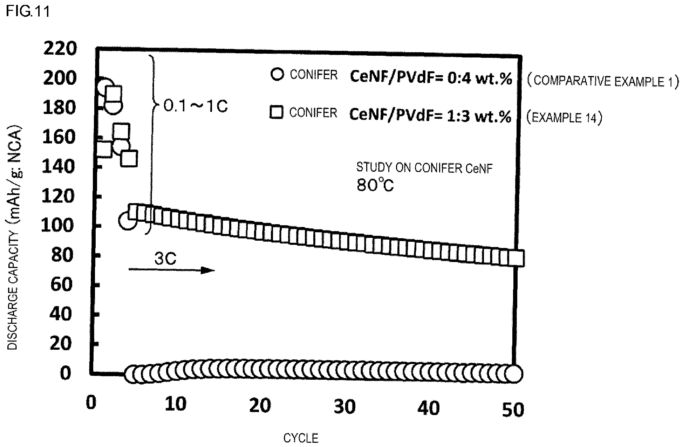

Fig. 11 is a graph showing a comparison between batteries (Example 14) that includes an electrode containing a binder material E as an electrode binder in Examples, and a battery (Comparative Example 1) that includes an electrode containing only a binder material G as an electrode binder.

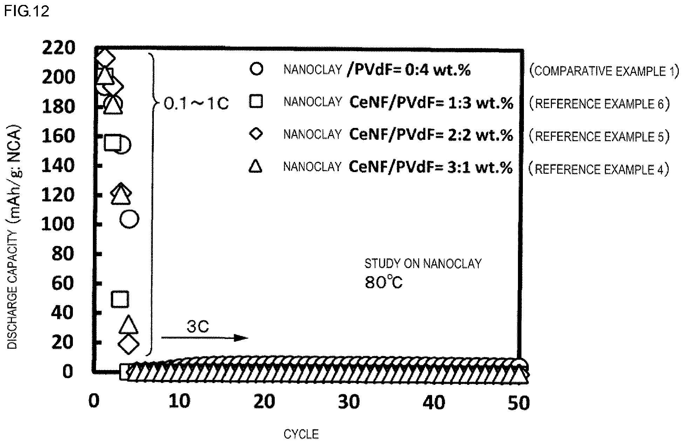

Fig. 12 is a graph showing a comparison between batteries (Reference Examples 4 to 6) that include an electrode containing a binder material F as an electrode binder in Examples, and a battery (Comparative Example 1) that includes an electrode containing only a binder material G as an electrode binder.

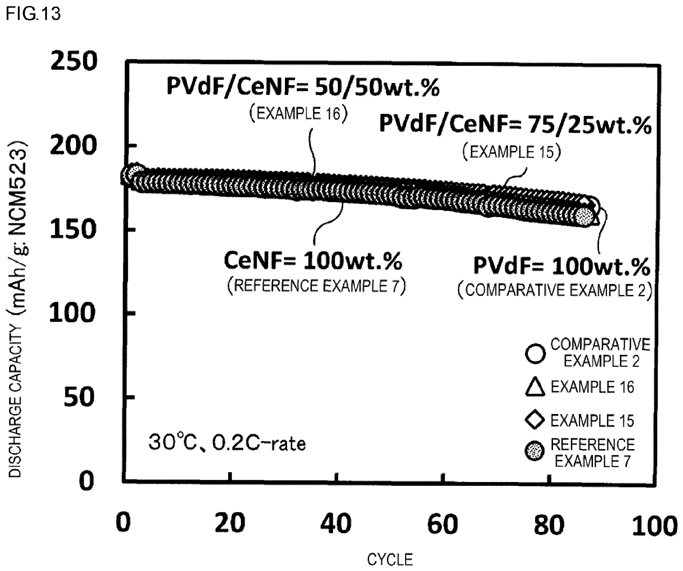

Fig. 13 is a graph showing a comparison between batteries (Example 15, Example 16, and Reference Example 7) that include an electrode containing a binder material A as an electrode binder in Examples, and a battery (Comparative Example 2) that includes an electrode containing only a binder material G as an electrode binder.

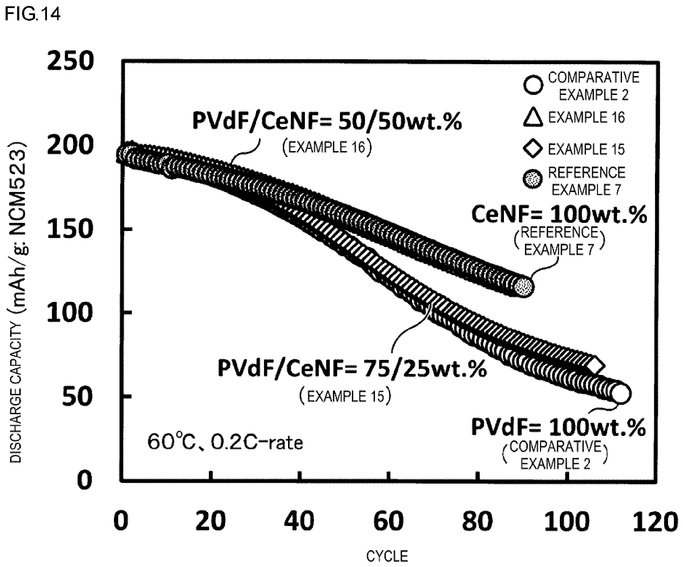

Fig. 14 is a graph showing a comparison between batteries (Example 15, Example 16, and Reference Example 7) that include an electrode containing a binder material A as an electrode binder in Examples, and a battery (Comparative Example 2) that includes an electrode containing only a binder material G as an electrode binder.

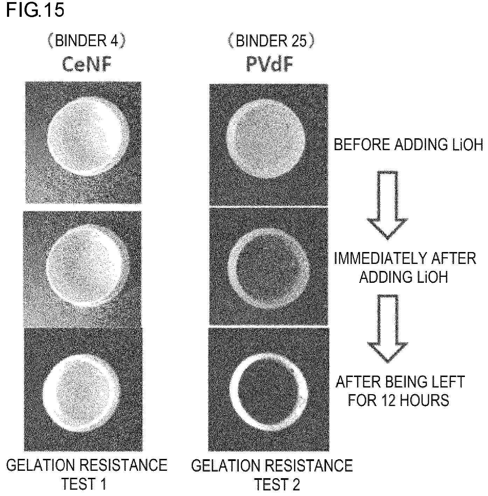

Fig. 15 shows the results of checking gelation resistance (gelation resistance tests 1 and 2) of the binders in Examples.

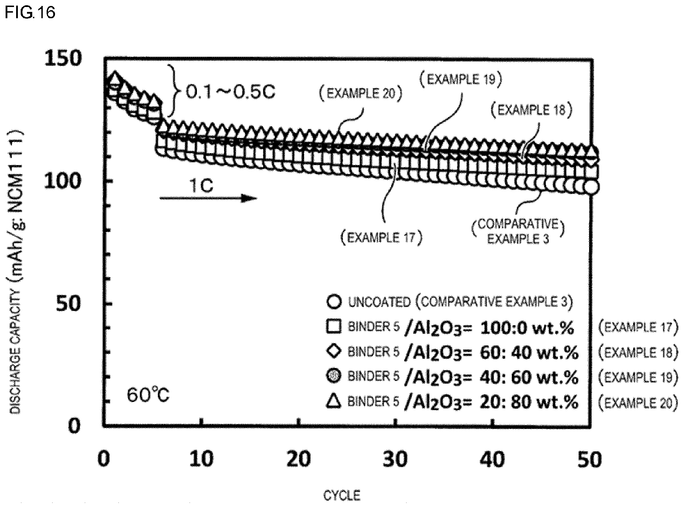

Fig. 16 is a graph showing a comparison between batteries (Examples 17 to 20) including test separators 1 to 4 and a battery (Comparative Example 3) including an uncoated separator.

DESCRIPTION OF EMBODIMENTS

Hereinafter, the present invention will be specifically described based on Examples, but the following Examples do not limit the present invention.

[1. Production of materials of composite binder]

Table 1 shows materials (binder materials A to G) for producing the composite binder.

The binder material A is a liquid in which untreated cellulose nanofibers are dispersed in NMP. The method of producing the binder material A includes: adding an equal to or higher volume of NMP to a liquid in which the untreated cellulose nanofibers were dispersed in water (solid content ratio: 5 mass%); evaporating water while stirring by a rotary evaporator (200 hPa, 70°C to 90°C, 160 rpm); and then irradiating ultrasonic waves (frequency 38 kHz, 1 minute) to the obtained liquid to produce the binder material A. Since the binder material A easily aggregated or precipitated when the solid content ratio was more than 7 mass%, the solid content ratio was set to 4.4 mass%. The liquid in which untreated cellulose nanofibers are dispersed in water was prepared by adding a commercially available crystalline cellulose powder (manufactured by Asahi Kasei Chemicals Co., Ltd, registered trademark: CEOLUS FD-101, average particle size: 50 μm, and bulk density: 0.3 g/cc) to water to make the amount of the cellulose to be 4 mass% based on the total amount of an aqueous dispersion liquid, and placing the mixture in a stone-mill type defibration treatment device to pass 10 times between stone mills.

The binder material B is a liquid in which cellulose nanofibers subjected to semi-esterification treatment are dispersed in NMP. The method of producing the binder material B is the same as that of the binder material A except that a liquid (solid content ratio: 5 mass%) in which the cellulose nanofibers subjected to the semi-esterification treatment are dispersed in water is used. Since the binder material B easily aggregated or precipitated when the solid content ratio was more than 10 mass%, the solid content ratio was set to 4.1 mass%. The liquid in which the cellulose nanofibers subjected to the semi-esterification treatment were dispersed in water was prepared by blending a commercially available untreated crystalline cellulose powder (manufactured by Asahi Kasei Chemicals Co., Ltd, registered trademark: CEOLUS FD-101, average particle size: 50 μm, and bulk density: 0.3 g/cc) and succinic anhydride in a ratio of 86.5 to 13.5, performing a reaction treatment in a container heated at 130°C, followed by adding the obtained product to water to make the amount of the cellulose to be 4 wt% based on a total amount of an aqueous dispersion liquid, and placing the mixture in stone-mill type defibration treatment device to pass 10 times between stone mills, .

The binder material C is a liquid in which cellulose nanofibers that are obtained by performing the semi-esterification treatment on the cellulose and then performing secondary propylene oxide addition are dispersed in NMP. The method of producing the binder material C is the same as that of the binder material B except that a liquid (solid content ratio: 5 mass%) in which the cellulose nanofibers that are obtained by performing the semi-esterification treatment on the cellulose and then performing secondary propylene oxide addition are dispersed in water is used. Since the binder material C easily aggregated or precipitated when the solid content ratio was more than 10 mass%, the solid content ratio was set to

3.3 mass%. The liquid in which the cellulose nanofibers subjected to addition treatment of propylene oxide were dispersed in water was prepared by blending a commercially available untreated crystalline cellulose powder (manufactured by Asahi Kasei Chemicals Co., Ltd, registered trademark: CEOLUS FD-101, average particle size: 50 μm, and bulk density: 0.3 g/cc) and succinic anhydride in a ratio of 86.5 to 13.5, performing a reaction treatment in a container heated at 130°C, followed by further adding propylene oxide to reach 4.5 wt% based on the weight of cellulose and performing reaction treatment at 140°C, further, adding the obtained product to water to make the amount of cellulose to be 4 wt% based on a total amount of an aqueous dispersion liquid, and placing the mixture in a stone-mill type defibration treatment device to pass 10 times between stone mills.

The binder material D is a liquid in which cellulose nanofibers containing lignin obtained from hardwoods are dispersed in NMP. The method of producing the binder material D is the same as that of the binder material A except that a liquid in which the cellulose nanofibers containing lignin obtained from hardwoods are dispersed in water is used. Since the binder material D easily aggregated or precipitated when the solid content ratio was more than 2 mass%, the solid content ratio was set to 1.5 mass%. The liquid in which the cellulose nanofibers containing lignin obtained from hardwoods are dispersed in water was prepared by adding cellulose to water to reach 4 wt% based on a total amount of an aqueous dispersion liquid, placing the mixture in a stone-mill type defibration treatment device to pass 10 times between stone mills.

The binder material E is a liquid in which cellulose nanofibers containing lignin obtained from conifers are dispersed in NMP. The method of producing the binder material E is the same as that of the binder material A except that the cellulose nanofibers generated from conifers are used. Since the binder material E easily aggregated or precipitated when the solid content ratio was more than 2 mass%, the solid content ratio was set to 1.3 mass%. The liquid in which the cellulose nanofibers containing lignin obtained from conifers are dispersed in water was prepared by adding cellulose to reach 4 wt% based on a total amount of an aqueous dispersion liquid, placing the mixture in a stone-mill type defibration treatment device to pass 10 times between stone mills.

A binder material F is a liquid in which nanoclay (smecton SAN manufactured by Kunimine Industries Co., Ltd. 4% dispersion liquid viscosity: 4000 mPa s) is dispersed in NMP. Since foaming of the binder material F was severe when the solid content ratio was more than 4 mass%, the solid content ratio was set to 1.9 mass%. The method of producing the binder material F includes: adding an equal to or higher volume of NMP to a liquid in which the nanoclay is dispersed in water (solid content ratio: 4 mass%); evaporating water while stirring by a rotary evaporator (200 hPa, 70°C to 90°C, 160 rpm); and then irradiating ultrasonic waves (frequency 38 kHz, 1 minute) to the obtained liquid to produce the binder material F.

A binder material G was a liquid in which PVdF was dissolved in NMP, and was prepared by mixing NMP with PVdF (weight average molecular weight: 280,000) by a self-orbital mixer (manufactured by Thinky Corporation, 2000 rpm, and 30 minutes). The binder material G had a solid content ratio of 12 mass%.

Table 1

| Binder Materials | Kind of binder material |
|---|---|
| Binder material A | Cellulose nanofibers (untreated) |
| Binder material B | Cellulose nanofibers (SA treated) |
| Binder material C | Cellulose nanofibers (PO addition after SA treatment) |
| Binder material D | Cellulose nanofibers (hardwood) |
| Binder material E | Cellulose nanofibers (conifer) |
| Binder material F | Nanoclay |
| Binder material G | PVdF |

Table 2

| Binder Materials | Dispersion material | Fiber diameter (nm) | Fiber length (μm) | Aspect ratio (fiber length/fiber diameter) | Lignin |
|---|---|---|---|---|---|
| Binder material A | Untreated | 50 to 200 | 1 to 1000 | 5 to 100000 | None |
| Binder material B | SA treatment | 50 to 200 | 1 to 1000 | 5 to 100000 | None |

(continued)

| Binder Materials | Dispersion material | Fiber diameter (nm) | Fiber length (μm) | Aspect ratio (fiber length/fiber diameter) | Lignin |
|---|---|---|---|---|---|
| Binder material C | PO addition treatment after SA treatment | 50 to 200 | 1 to 1000 | 5 to 100000 | None |
| Binder material D | Hardwood | 700 to 1200 | 1 to 4000 | 0.8 to 5700 | Present |
| Binder material E | Conifer | 700 to 1200 | 1 to 4000 | 0.8 to 5700 | Present |

[2. Production of binder]

Composite binders were prepared from the binder materials A to G, which contains NMP as a solvent of binders, by a self-orbital mixer (manufactured by Thinky Corporation, Neritaro, 2000 rpm, and 30 minutes), to make the electrode binder have a predetermined solid composition as shown in the following Table 3.

Table 3 Mixing ratio of cellulose nanofibers and PVdF

| Electrode binder | Composition ratio of binder material (solid content mass ratio) | | | | | | |
|---|---|---|---|---|---|---|---|
| | Binder material A | Binder material B | Binder material C | Binder material D | Binder material E | Binder material F | Binder material G |
| Binder 1 | 25 | - | - | - | - | - | 75 |
| Binder 2 | 50 | - | - | - | - | - | 50 |
| Binder 3 | 75 | - | - | - | - | - | 25 |
| Binder 4 | 100 | - | - | - | - | - | - |
| Binder 5 | - | 25 | - | - | - | - | 75 |
| Binder 6 | - | 50 | - | - | - | - | 50 |
| Binder 7 | - | 75 | - | - | - | - | 25 |
| Binder 8 | - | 100 | - | - | - | - | - |
| Binder 9 | - | - | 25 | - | - | - | 75 |
| Binder 10 | - | - | 50 | - | - | - | 50 |
| Binder 11 | - | - | 75 | - | - | - | 25 |
| Binder 12 | - | - | 100 | - | - | - | - |
| Binder 13 | - | - | - | 25 | - | - | 75 |
| Binder 14 | - | - | - | 50 | - | - | 50 |
| Binder 15 | - | - | - | 75 | - | - | 25 |
| Binder 16 | - | - | - | 100 | - | - | - |
| Binder 17 | - | - | - | - | 25 | - | 75 |
| Binder 18 | - | - | - | - | 50 | - | 50 |
| Binder 19 | - | - | - | - | 75 | - | 25 |
| Binder 20 | - | - | - | - | 100 | - | - |
| Binder 21 | - | | - | - | - | 25 | 75 |
| Binder 22 | - | - | - | - | - | 50 | 50 |
| Binder 23 | - | - | - | - | - | 75 | 25 |
| Binder 24 | - | - | - | - | - | 100 | - |

(continued)

| Electrode binder | Composition ratio of binder material (solid content mass ratio) | | | | | | |
|---|---|---|---|---|---|---|---|
| | Binder material A | Binder material B | Binder material C | Binder material D | Binder material E | Binder material F | Binder material G |
| Binder 25 | - | - | - | - | - | - | 100 |

[3. Production of slurry and electrode]

<Study on aggregation and sedimentation of the slurry>

This is a test of studying properties related to aggregation and sedimentation of a slurry.

An NCA electrode slurry was obtained by blending NCA ($LiNi_{0.8}Co_{0.15}Al_{0.05}O_2$) as an active substance, acetylene black as a conductive aid, and a predetermined electrode binder shown in Table 4 to make a solid content ratio of 94 mass%:2 mass%:4 mass%, and kneading and slurrying by a self-orbital mixer (manufactured by Thinky Corporation, Neritaro, 2000 rpm, and 15 minutes).

As shown in Table 4, an aggregation state, a sedimentation state, and a foaming state of a slurry were observed, and then an aluminum current collector having a thickness of 20 μm was coated with the slurry by a doctor blade to observe coatability of the slurry.

As is clear from Table 4, it can be seen that preferred is a slurry in which cellulose nanofibers contained in a binder are the cellulose nanofibers subjected to the polybasic acid semi-esterification (SA) treatment or the cellulose nanofibers further subjected to the propylene oxide addition treatment as a secondary treatment, compared with a slurry in which cellulose nanofibers contained in a binder are untreated cellulose nanofibers. In addition, it can be seen that as a general trend, the aggregation property tends to be improved with an increase in the content of PVDF, and coatability approaches to that of a slurry only containing PVdF.

Table 4

| Slurry | Composition of electrode binder (mass ratio of solid content) | Aggregation | Sedimentation | Foaming | Fluidity | Coatability | Binding property |
|---|---|---|---|---|---|---|---|
| Slurry 1 | Untreated = 100 | D | C | B | C | D | C |
| Slurry 2 | Untreated/PVdF = 75/25 | D | B | A | B | C | B |
| Slurry 3 | Untreated/PVdF = 50/50 | C | B | A | B | B | B |
| Slurry 4 | Untreated/PVdF = 25/75 | B | B | A | B | B | B |
| Slurry 5 | SA treated = 100 | B | B | B | A | A | B |
| Slurry 6 | SA treated/PVdF = 75/25 | A | A | A | A | A | A |
| Slurry 7 | SA treated/PVdF = 50/50 | A | A | A | A | A | A |
| Slurry 8 | SA treated/PVdF = 25/75 | A | A | A | A | A | A |
| Slurry 9 | SAPO addition = 100 | B | B | B | A | B | B |
| Slurry 10 | SAPO addition/PVdF = 75/25 | A | A | A | A | B | A |

(continued)

| Slurry | Composition of electrode binder (mass ratio of solid content) | Aggregation | Sedimentation | Foaming | Fluidity | Coatability | Binding property |
|---|---|---|---|---|---|---|---|
| Slurry 11 | SAPO addition/PVdF = 50/50 | A | A | A | A | A | A |
| Slurry 12 | SAPO addition/PVdF = 25/75 | A | A | A | B | A | A |
| Slurry 13 | Hardwood = 100 | D | D | B | B | D | B |
| Slurry 14 | Hardwood/PVdF = 75/25 | D | C | A | B | D | A |
| Slurry 15 | Hardwood/PVdF = 50/50 | D | B | A | B | D | A |
| Slurry 16 | Hardwood/PVdF = 25/75 | C | B | A | B | C | A |
| Slurry 17 | Conifer = 100 | D | D | B | B | D | B |
| Slurry 18 | Conifer/PVdF = 75/25 | D | C | A | B | D | A |
| Slurry 19 | Conifer/PVdF = 50/50 | D | B | A | B | D | A |
| Slurry 20 | Conifer/PVdF = 25/75 | C | B | A | B | C | A |
| Slurry 21 | Nanoclay = 100 | A | A | D | A | D | D |
| Slurry 22 | Nanoclay/PVdF = 75/25 | A | A | B | A | D | D |
| Slurry 23 | Nanoclay/PVdF = 50/50 | A | A | B | B | D | C |
| Slurry 24 | Nanoclay/PVdF = 25/75 | A | A | B | B | C | C |
| Slurry 25 | PVdF = 100 | A | A | A | D | A | C |

Aggregation: A completely no aggregation, B hard to aggregate, C easy to aggregate, D aggregate immediately
Sedimentation: A completely no precipitation, B hard to precipitate, C easy to precipitate, D precipitate immediately
Foaming: A completely no foam, B slightly foam, D contain a lot of small bubbles
Fluidity: A very good, B good, D no fluidity (gelation)
Coatability: A very good, B good, C has small uneven parts, D has large uneven parts
Binding property: A very good, B good, D easy to peel off from a current collector

<Production of NCA electrode>

Test electrodes 1 to 25 were produced by applying slurries (slurries 1 to 25) shown in Table 4 onto aluminum foils each having a thickness of 20 μm by an applicator, performing temporary drying at 80°C, then rolling by a roll press, and drying under reduced pressure (160°C, 12 hours). The capacity density of each NCA positive electrode was 2.1 mAh/cm$^2$. However, since a solid content of a slurry was too small for the test electrode 13, the test electrode 17, and the test electrode 21, an electrode having a capacity density more than 1 mAh/cm$^2$ could not be produced. From this result, it can be seen that the solid content ratio of the binder material is preferably 2 mass% or more.

<Production of NCM523 electrode>

Test electrodes 26 to 29 were produced by applying slurries, which were obtained by blending NCM ($LiNi_{0.3}Co_{0.2}Mn_{0.3}O_2$) as an active substance, acetylene black as a conductive aid, and a predetermined electrode binder shown in Table 5 to make a solid content ratio of 94 mass%:2 mass%:4 mass%, and kneading and slurrying by a self-orbital mixer (manufactured by Thinky Corporation, Neritaro, 2000 rpm, and 15 minutes), to aluminum foils each having a thickness of 20 μm by an applicator, performing temporary drying at 80°C, then rolling by a roll press, and drying under reduced pressure (160°C, 12 hours). Each NCM523 positive electrode has the capacity density of was 2.5 mAh/cm$^2$.

Table 5

| Test electrode | Composition of electrode binder (mass ratio of solid content) |
|---|---|
| Test electrode 26 | Untreated = 100 |
| Test electrode 27 | Untreated/PVdF = 75/25 |
| Test electrode 28 | Untreated/PVdF = 50/50 |
| Test electrode 29 | PVdF = 100 |

[4. Production of NCA/Si full battery]

NCA/Si full batteries in Examples 1 to 14, Reference Examples 1 to 6 and Comparative Example 1 are test batteries including test electrodes shown in Table 6. As the test batteries, a CR 2032 type coin cell was produced with an NCA electrode (test electrode) as a positive electrode, a Si electrode as a negative electrode, a glass non-woven fabric (GA-100) as a separator, and 1 mol/L of $LiPF_6$ (EC:DEC = 50:50 vol%, +VC1 mass%) as an electrolytic solution.

The Si electrode was produced by blending Si, PVdF (weight average molecular weight: 280,000) and acetylene to reach a solid content ratio of 94 mass%:2mass%:4 mass%, kneading and slurrying by a self-orbital mixer (manufactured by Thinky Corporation, Neritaro, 2000 rpm, and 15 minutes), coating the slurry to a stainless steel foil having a thickness of 8 μm, temporarily drying at 100°C, then applying an alkali metal silicate aqueous solution ($A_2O_nSiO_2$; n = 3.2, A = Li, Na, K) thereto by a gravure coater, and drying under reduced pressure (160°C, 12 hours). The Si electrode had a capacity density of 4.5 mAh/cm$^2$. The reason why the Si electrode was coated with the alkali metal silicate aqueous solution was to extend the life of the Si electrode, as described in Patent Literature 7, , and it was applied to improve high-temperature durability so that the test battery was not limited by the characteristics of the Si negative electrode.

In the present invention, the term "full battery" means a battery evaluated without containing metal lithium as a counter electrode, and the term "half battery" means a battery containing metal lithium as a counter electrode.

Table 6

| Test battery | Test electrode | Composition of electrode binder (mass ratio of solid content) |
|---|---|---|
| Reference Example 1 | Test electrode 1 | Untreated = 100 |
| Example 1 | Test electrode 2 | Untreated/PVdF = 75/25 |
| Example 2 | Test electrode 4 | Untreated/PVdF = 25/75 |
| Reference Example 2 | Test electrode 5 | SA treated = 100 |
| Example 3 | Test electrode 6 | SA treated/PVdF = 75/25 |
| Example 4 | Test electrode 7 | SA treated/PVdF = 50/50 |
| Example 5 | Test electrode 8 | SA treated/PVdF = 25/75 |
| Reference Example 3 | Test electrode 9 | SAPO addition = 100 |
| Example 6 | Test electrode 10 | SAPO addition/PVdF = 75/25 |
| Example 7 | Test electrode 11 | SAPO addition/PVdF = 50/50 |
| Example 8 | Test electrode 12 | SAPO addition/PVdF = 25/75 |
| Example 9 | Test electrode 14 | Hardwood/PVdF = 75/25 |
| Example 10 | Test electrode 15 | Hardwood/PVdF = 50/50 |
| Example 11 | Test electrode 16 | Hardwood/PVdF = 25/75 |

(continued)

| Test battery | Test electrode | Composition of electrode binder (mass ratio of solid content) |
|---|---|---|
| Example 12 | Test electrode 18 | Conifer/PVdF = 75/25 |
| Example 13 | Test electrode 19 | Conifer/PVdF = 50/50 |
| Example 14 | Test electrode 20 | Conifer/PVdF = 25/75 |
| Reference Example 4 | Test electrode 22 | Nanoclay/PVdF = 75/25 |
| Reference Example 5 | Test electrode 23 | Nanoclay/PVdF = 50/50 |
| Reference Example 6 | Test electrode 24 | Nanoclay/PVdF = 25/75 |
| Comparative Example 1 | Test electrode 25 | PVdF = 100 |

<Cycle life characteristic in an environment of temperature at 60°C>

This is a test of evaluating cycle-life characteristics of test batteries in Examples 1 to 14, Reference Examples 1 to 6, and Comparative Example 1 in an environment of temperature at 60°C.

In a charge/discharge test, under conditions of an ambient temperature of 60°C and a cut-off potential of 4.25 V to 2.7 V, one cycle of charge/discharge was performed at rates of 0.1C-rate, 0.2C-rate, 0.5C-rate, and 1C-rate, and then charge/discharge was repeated at 3C-rate.

Note that the term "charge/discharge rate" refers to an index based on the fact that a cell having a capacity of a nominal capacity value is discharged at a constant current, and a current value at which complete discharge occurs in one hour is defined as "1C-rate", for example, a current value at which complete discharge occurs in five hours is defined as "0.2C-rate", and a current value at which complete discharge occurs in 10 hours is defined as "0.1C-rate".

Fig. 1 is a graph showing a comparison between batteries (Example 1, Example 2, Reference Example 1) that include an electrode containing a binder material A as an electrode binder, and a battery (Comparative Example 1) that includes an electrode containing only a binder material G as an electrode binder.

Fig. 2 is a graph showing a comparison between batteries (Examples 3 to 5, and Reference Example 2) that include an electrode containing a binder material B as an electrode binder, and a battery (Comparative Example 1) that includes an electrode containing only a binder material G as an electrode binder.

Fig. 3 is a graph showing a comparison between batteries (Examples 6 to 8, and Reference Example 3) that include an electrode containing a binder material C as an electrode binder, and a battery (Comparative Example 1) that includes an electrode containing only a binder material G as an electrode binder.

Fig. 4 is a graph showing a comparison between batteries (Examples 9 to 11) that include an electrode containing a binder material D as an electrode binder, and a battery (Comparative Example 1) that includes an electrode containing only a binder material G as an electrode binder.

Fig. 5 is a graph showing a comparison between batteries (Examples 12 to 14) that include an electrode containing a binder material E as an electrode binder, and a battery (Comparative Example 1) that includes an electrode containing only a binder material G as an electrode binder.

Fig. 6 is a graph showing a comparison between batteries (Reference Examples 4 to 6) that include an electrode containing a binder material F as an electrode binder, and a battery (Comparative Example 1) that includes an electrode containing only a binder material G as an electrode binder.

As is clear from Figs. 1 to 6, it can be seen that batteries (Examples 1 to 14) containing any one of the binder materials A to E in electrode binders clearly exhibit improved cycle-life characteristics as compared with a battery (Comparative Example 1) containing only the binder material G as an electrode binder. In contrast, even with the same nano-order particles, batteries (Reference Examples 4 to 6) containing the binder material F in electrode binders did not have an effect of improving the life-span, but rather the performance deteriorated. From these results, it could be seen that the electrode binder containing cellulose nanofibers had an effect of improving cycle-life characteristics of a battery at a high temperature.

<Cycle life characteristic in an environment of a temperature at 80°C>

This is a test of evaluating cycle-life characteristics of test batteries in Examples 1 to 14, Reference Examples 1 to 6, and Comparative Example 1 in an environment of a temperature at 80°C.

In a charge/discharge test, under conditions of an ambient temperature of 80°C and a cut-off potential of 4.25 V to 2.7 V, one cycle of charge/discharge was performed at rates of 0.1C-rate, 0.2C-rate, 0.5C-rate, and 1C-rate, and then charge/discharge was repeated at 3C-rate.

Fig. 7 is a graph showing a comparison between batteries (Example 1, Example 2, and Reference Example 1) that include an electrode containing a binder material A as an electrode binder, and a battery (Comparative Example 1) that includes an electrode containing only a binder material G as an electrode binder.

Fig. 8 is a graph showing a comparison between batteries (Examples 3 to 5, and Reference Example 2) that include an electrode containing a binder material B as an electrode binder, and a battery (Comparative Example 1) that includes an electrode containing only a binder material G as an electrode binder.

Fig. 9 is a graph showing a comparison between batteries (Examples 6 to 8, and Reference Example 3) that include an electrode containing a binder material C as an electrode binder, and a battery (Comparative Example 1) that includes an electrode containing only a binder material G as an electrode binder.

Fig. 10 is a graph showing a comparison between batteries (Examples 9 to 11) that include an electrode containing a binder material D as an electrode binder, and a battery (Comparative Example 1) that includes an electrode containing only a binder material G as an electrode binder.

Fig. 11 is a graph showing a comparison between batteries (Example 14) that includes an electrode containing a binder material E as an electrode binder, and a battery (Comparative Example 1) that includes an electrode containing only a binder material G as an electrode binder.

Fig. 12 is a graph showing a comparison between batteries (Reference Examples 4 to 6) that include an electrode containing a binder material F as an electrode binder, and a battery (Comparative Example 1) that includes an electrode containing only a binder material G as an electrode binder.

As is clear from Figs. 7 to 12, it can be seen that batteries (Examples 1 to 14) containing any one of the binder materials A to E in electrode binders exhibit improved cycle-life characteristics as compared with a battery (Comparative Example 1) including only the binder material G as an electrode binder. In contrast, even with the same nano-order particles, batteries (Reference Examples 4 to 6) containing the binder material F in electrode binders did not have an effect of improving life-span. From these results, it could be seen that the electrode binder containing cellulose nanofibers had an effect of improving cycle-life characteristics of a battery at a high temperature. Particularly, batteries containing any one of the binder materials A to C (Examples 1 to 8, and Reference Examples 1 to 3) in electrode binders showed a remarkable difference particularly.

In the environment of a temperature at 80°C, as the cellulose nanofibers contained in the binder of the test electrode increases, the cycle-life characteristics at a high temperature tend to be improved, but the output characteristics tend to decrease.

[5. Production of NCM523/SiO full battery]

The NCM 523 electrodes in Example 15, Example 16, Reference Example 7 and Comparative Example 2 are test batteries including electrode binders shown in Table 7. As the test batteries, a CR 2032 type coin cell was produced with an NCM523 electrode (test electrode) as a positive electrode, a SiO electrode as a negative electrode, a polyolefin microporous film as a separator (PP/PE/PP), and 1 mol/L of $LiPF_6$ (EC:DEC = 50:50 vol%) as an electrolyte solution.

The SiO electrode was produced by blending SiO, PVA (polymerization degree 2800), acetylene black, and VGCF to reach a solid content ratio of 94 mass%: 10 mass%:4 mass%:1 mass%, kneading and slurrying by a self-orbital mixer (manufactured by Thinky Corporation, Neritaro, 2000 rpm, and 15 minutes), applying the slurry to a copper foil having a thickness of 40 μm, temporarily drying at 80°C, and then drying under reduced pressure (160°C, 12 hours). The SiO electrode has a capacity density of 3.2 mAh/$cm^2$. As the SiO electrode, before assembling the full battery, a half battery was produced in advance with metallic lithium as a counter electrode, and after canceling the irreversible capacity, the SiO electrode obtained by disassembling the half battery was used.

Table 7

| Test battery | Test electrode | Composition of electrode binder (mass ratio of solid content) |
|---|---|---|
| Reference Example 7 | Test electrode 26 | Untreated = 100 |
| Example 15 | Test electrode 27 | Untreated/PVdF = 75/25 |
| Example 16 | Test electrode 28 | Untreated/PVdF = 50/50 |
| Comparative Example 2 | Test electrode 29 | PVdF = 100 |

<Cycle life characteristic in an environment of a temperature at30°C>

This is a test of evaluating cycle-life characteristics of test batteries in Example 15, Example 16, Reference Example 7, and Comparative Example 2 in an environment of a temperature at 30°C.

In a charge/discharge test, charge/discharge was repeated at 0.2C-rate under conditions of an ambient temperature of 30°C and cutoff potential 4.3 V to 2.5 V.

Fig. 13 is a graph showing a comparison between batteries (Example 15, Example 16, Reference Example 7) that include an electrode containing a binder material A as an electrode binder, and a battery (Comparative Example 2) that includes an electrode containing only a binder material G as an electrode binder.

As is clear from Fig. 13, in the environment of a temperature at 30°C, there is no significant difference in cycle-life characteristics.

<Cycle life characteristic in an environment of a temperature at 60°C>

This is a test of evaluating cycle-life characteristics of test batteries in Example 15, Example 16, Reference Example 7, and Comparative Example 2 in an environment of a temperature at 60°C.

In a charge/discharge test, charge/discharge was repeated at 0.2C-rate under conditions of an ambient temperature of 60°C and cutoff potential 4.3 V to 2.5 V.

Fig. 14 is a graph showing a comparison between batteries (Example 15, Example 16, Reference Example 7) that include an electrode containing a binder material A as an electrode binder, and a battery (Comparative Example 2) that includes an electrode containing only a binder material G as an electrode binder.

As is clear from Fig. 14, in the environment of a temperature at 60°C, the cycle-life characteristics are improved by containing the binder material A. Particularly, regarding a ratio of the binder material A and the binder material G, the effect increases as the amount of the binder material A increases.

[6. Examination of gelation resistance]

This is a test of examining whether a binder gels by strong alkalinity.

(Gelation resistance test 1)

In the gelation resistance test 1, 2 mass% of lithium hydroxide (LiOH) was added to Binder 4, and the mixture was stirred by a self-orbital mixer (manufactured by Thinky Corporation, Neritaro, 2000 rpm, 15 minutes) and then was allowed to stand for 12 hours in an environment of a temperature at 25°C.

(Gelation resistance test 2)

In the gelation resistance test 2, 2 mass% of lithium hydroxide (LiOH) was added to Binder 25, and the mixture was stirred by a self-orbital mixer (manufactured by Thinky Corporation, Neritaro, 2000 rpm, 15 minutes) and then was allowed to stand for 12 hours in an environment having a temperature of 25°C.

Fig. 15 shows the results of examining the gelation resistance of binders. As is clear from Fig. 15, in the gelation resistance test 2, the color changes immediately after the addition of LiOH, whereas the color does not change even if the binder is left for 12 hours in the gelation resistance test 1. In addition, in the gelation resistance test 2, PVdF gelled and changed to a gum-like substance after standing for 12 hours, whereas fluidity of the binder was not lost in the gelation resistance test 1.

[7. Production of surface coated separator]

Test separators 1 to 4 were produced by kneading and slurrying Binder 5 and alumina (particle diameter 200 nm) by a self-orbital mixer (manufactured by Thinky Corporation, Neritaro, 2000 rpm, and 30 minutes) to make predetermined solid content compositions shown in Table 8, applying the slurry to one surface of a polypropylene (PP) microporous film having a thickness of 16 μm, and temporarily drying at 70°C, and then drying under reduced pressure (80°C, and 24 hours). The thickness of each of the surface coating layers of the test separators 1 to 4 was 4 μm. As a Comparative Example, an uncoated PP microporous film was taken as the test separator 5.

The test batteries in Example 17, Example 18, Example 19, Example 20, and Comparative Example 3 are test batteries including separators 1 to 5 shown in Table 8. The test batteries (NCM111/graphite full battery) were produced by assembling CR2032 type coin cells with an NCM111 electrode as a positive electrode, a graphite electrode as a negative electrode, the test separators 1 to 5 as separators, and 1 mol/L of $LiPF_6$ (EC: DEC = 50:50 vol%) as an electrolyte solution, and placing the coin cells in an environment of a temperature at 80°C for one hour. The coating layer of the separator was provided on the positive electrode side.

The NCM111 electrode was produced by blending NCM111, PVdF (weight average molecular weight: 280,000), and acetylene black to reach a solid content ratio of 91 mass%:5 mass%:4 mass%, kneading and slurrying by a self-orbital

mixer (manufactured by Thinky Corporation, Neritaro, 2000 rpm, and 15 minutes), applying the slurry by to an aluminum foil having a thickness of 15 μm, temporarily drying at 80°C, and then drying under reduced pressure (160°C, 12 hours). The one side of the NCM111 electrode had a capacity density of 2.5 mAh/$cm^2$.

The graphite electrode was produced by blending graphite, SBR, carboxymethyl cellulose (CMC), acetylene black, and VGCF to reach a solid content ratio of 93.5 mass%: 2.5 mass%:1.5 mass%:2 mass%:0.5 mass%, kneading and slurrying by a self-orbital mixer (manufactured by Thinky Corporation, Neritaro, 2000 rpm, and 15 minutes), applying the slurry to a copper foil having a thickness of 10 μm, temporarily drying at 80°C, and then drying under reduced pressure (160°C, 12 hours). The one side of the graphite electrode had a capacity density of 3.0 mAh/$cm^2$. In this test, the graphite electrode does not cancel the irreversible capacity.

Table 8

| Test battery | Test separator | Composition of surface coat layer of separator (mass ratio of solid content) |
|---|---|---|
| Example 17 | Test separator 1 | Binder 5 = 100 |
| Example 18 | Test separator 2 | Binder 5/$Al_2O_3$ = 60/40 |
| Example 19 | Test separator 3 | Binder 5/$Al_2O_3$ = 40/60 |
| Example 20 | Test separator 4 | Binder 5/$Al_2O_3$ = 20/80 |
| Comparative Example 3 | Test separator 5 | Uncoated |

<Cycle life characteristic in an environment of a temperature at 60°C>

This is a test of evaluating cycle-life characteristics of test batteries in Examples 17 to 20, and Comparative Example 3 in an environment of a temperature at 60°C.

In a charge/discharge test, under conditions of an ambient temperature of 60°C and a cut-off potential of 4.3V to 2.5V, two cycles of charge/discharge were performed at 0.1C-rate, then three cycles of charge/discharge were performed at 0.2C-rate, and then charge/discharge was repeated at 1C-rate.

Fig. 16 is a graph showing a comparison between batteries (Examples 17 to 20) including test separators 1 to 4 and a battery (Comparative Example 3) using an uncoated separator.

As is clear from Fig. 16, the cycle-life characteristics are improved by providing a coating layer on a surface of a separator. Particularly, when $Al_2O_3$ was contained, the effect is increased.

<Nail penetration safety>

A test for the safety of a battery (Example 21) using a surface coated separator was conducted. In addition, a battery (Comparative Example 4) including an uncoated separator as a comparison was produced and was subjected to a similar test.

A test method is according to a nail penetration test in which a nail is inserted into a laminated battery and smoke or ignition of the laminated battery is examined. Example 21 was performed in the same manner as example 20 except that in the test, a laminated battery of 1.2 Ah is used, which is obtained by stacking a plurality of graphite negative electrodes (capacity density of both sides is 6 mAh/$cm^2$), separators, and NCM 111 positive electrodes (capacity density of both sides is 5 mAh/$cm^2$) in an aluminum laminated casing, and sealing an electrolytic solution together in the casing. Comparative Example 4 was performed in the same manner as Comparative Example 3.

In the nail penetration test, the battery was charged up to 4.2 V at 0.1C-rate, then an iron nail (φ3mm, round shape) was pierced into a center of the battery until it penetrates the battery at a speed of 1 mm/sec in an environment of a temperature at 25°C, and battery voltage, temperature of the nail, and temperature of the casing were measured.

When the nail penetration was performed on the battery (Comparative Example 4) including an uncoated separator, the voltage of the battery dropped to 0 V and a large amount of smoke was generated. This is because the separator meltdown due to the heat generated when a short circuit occurs inside the battery, leading to a complete short circuit.

In contrast, when nail penetration was performed on a battery (Example 21) including a separator on which a ceramic layer including Binder 5 and $Al_2O_3$ was formed on a surface thereof, a voltage of 3 V or more was maintained, no smoke was generated, the temperature of the casing and the nail was 50°C or lower, and heat generation due to a short circuit hardly occurs. This is because the separator does not meltdown even if heat is generated when a short circuit occurs inside the battery, and a complete short circuit does not occur.

Although the preferred Examples of the present invention have been described above with reference to the

drawings, various additions, modifications, and deletions may be made without departing from the spirit of the present invention. For example, the ratio of cellulose nanofibers and a thermoplastic fluororesin is not limited to the numerical values of the above embodiment. In the above Example, as the thermoplastic fluororesin, PVdF may be a polymer or a copolymer and further the weight average molecular weight is not limited to 280,000. Cellulose nanofibers, containing anionic groups such as carboxylic acid groups, sulfonic acid groups, phosphoric acid groups, and sulfate groups are also within the scope of the present invention. In addition, the active substance is not limited to NCA or NCM523 and may be any materials capable of reversibly occluding and releasing Li ions. Accordingly, such substances are also within the scope of the present invention.

## Claims

**1.** A composite nonaqueous binder of a cellulose nanofiber and a thermoplastic fluororesin for an electrode or a separator of a lithium ion battery,

wherein the cellulose nanofiber is a cellulose having a fiber diameter (diameter) of 0.002 μm or more and 1 μm or less, a fiber length of 0.5 μm or more and 10 mm or less, and an aspect ratio (fiber length of the cellulose nanofiber/fiber diameter of the cellulose nanofiber) of 2 or more and 100,000 or less, wherein the fiber diameter and the fiber length are measured as described in the description;
wherein, when the total amount of solid contents of the cellulose nanofiber and the thermoplastic fluororesin is taken as 100 mass%, the cellulose nanofiber is contained in an amount of 5 mass% or more and 80 mass% or less, and the thermoplastic fluororesin is contained in an amount of 20 mass% or more and 95 mass% or less; and
wherein the cellulose fibers are present in a dispersed state in the thermoplastic fluororesin.

**2.** The binder according to claim 1, wherein the cellulose nanofiber comprises a cellulose nanofiber subjected to polybasic acid semi-esterification treatment to replace some of hydroxyl groups with carboxyl groups.

**3.** The binder according to claim 1 or 2, wherein the cellulose nanofiber comprises a cellulose nanofiber subjected to ethylene oxide addition treatment or propylene oxide addition treatment.

**4.** The binder according to any one of claims 1 to 3, wherein the thermoplastic fluororesin comprises a polyvinylidene fluoride or a vinylidene fluoride copolymer.

**5.** The binder according to any one of claims 1 to 4, wherein the thermoplastic fluororesin is dissolved in N-methyl-2-pyrrolidone, and the cellulose nanofibers are dispersed in N-methyl-2-pyrrolidone,
wherein when a total mass of the cellulose nanofibers, the thermoplastic fluororesin, and the N-methyl-2-pyrrolidone in the binder is taken as 100 mass%, a total amount of solid contents of the cellulose nanofibers and the thermoplastic fluororesin is 3 mass% or more and 30 mass% or less.

**6.** An electrode comprising the binder according to any one of claims 1 to 5.

**7.** The electrode according to claim 6, comprising a polymer gel comprising a lithium hexafluorophosphate, a cyclic carbonate, and a chain carbonate, wherein the polymer gel is a composite cellulose nanofiber, and the composite nanofiber is the cellulose nanofiber present in a dispersed state in the thermoplastic fluororesin.

**8.** The electrode according to claim 6 or 7 comprising a Li-containing active substance.

**9.** A separator comprising the binder according to any one of claims 1 to 5.

**10.** The separator according to claim 9, comprising a polymer gel comprising a lithium hexafluorophosphate, a cyclic carbonate, and a chain carbonate, wherein the polymer gel is a composite cellulose nanofiber, and the composite nanofiber is the cellulose nanofiber present in a dispersed state in the thermoplastic fluororesin.

**11.** A lithium ion battery comprising the electrode according to any one of claims 6 to 8,

wherein the electrode is integrated with a separator in the battery, and
wherein the electrode is bonded and integrated with the separator through the binder contained in the electrode.

**12.** A lithium ion battery comprising the separator according to claim 9 or 10,

wherein the separator is integrated with an electrode in the battery, and
wherein the separator is bonded and integrated with the electrode through the binder contained in the separator.

**13.** An electrical device comprising the battery according to claim 11 and/or the battery according to claim 12.

**14.** A method of producing the composite nonaqueous binder of a cellulose nanofiber and a thermoplastic fluororesin for an electrode or a separator of a lithium ion battery according to claim 1, the binder being a liquid in which a thermoplastic fluororesin is dissolved in N-methyl-2-pyrrolidone and cellulose nanofibers are dispersed,

wherein the cellulose nanofiber is a cellulose having a fiber diameter (diameter) of 0.002 μm or more and 1 μm or less, a fiber length of 0.5 μm or more and 10 mm or less, and an aspect ratio (fiber length of the cellulose nanofiber/fiber diameter of the cellulose nanofiber) of 2 or more and 100,000 or less, wherein the fiber diameter and the fiber length are measured as described in the description;
the method comprising a step (E) of mixing the cellulose nanofibers with the thermoplastic fluororesin so that the amount of the cellulose nanofibers is 5 mass% or more and 80 mass% or less and the amount of the thermoplastic fluororesin is 20 mass% or more and 95 mass% or less when the total amount of solid contents of the cellulose nanofibers and the thermoplastic fluororesin is taken as 100 mass%, and dissolving the thermoplastic fluororesin in N-methyl-2-pyrrolidone;
wherein the cellulose nanofibers are present in a dispersed state in the thermoplastic fluororesin.

**15.** A method of producing a lithium ion battery comprising the electrode according to any one of claims 6 to 8 for at least one of a positive electrode and a negative electrode,

the method comprising a step (F) of
sealing a stacked or wound electrode group with a separator interposed between the positive electrode and the negative electrode in a battery case together with an electrolytic solution containing lithium hexafluorophosphate and aprotic carbonates,
thereafter heating the battery case to raise the temperature thereof to 50°C or higher and 120°C or lower,
applying a pressure from outside of the battery case perpendicularly to an extension direction of the electrode, thereby integrating the separator with the electrode comprising a composite binder of a cellulose nanofiber and a thermoplastic fluororesin.

**16.** A method of producing a lithium ion battery comprising the separator according to claim 9 or 10,

the method comprising a step (F) of
sealing a stacked or wound electrode group with a separator interposed between a positive electrode and a negative electrode in a battery case together with an electrolytic solution containing lithium hexafluorophosphate and aprotic carbonates,
thereafter heating the battery case to raise the temperature thereof to 50°C or higher and 120°C or lower,
applying a pressure from outside of the battery case perpendicularly to an extension direction of the electrode, thereby integrating the separator with the electrode comprising a composite binder of a cellulose nanofiber and a thermoplastic fluororesin.

## Patentansprüche

**1.** Nichtwässriges Verbundbindemittel aus einer Cellulose-Nanofaser und einem thermoplastischen Fluorharz für eine Elektrode oder einen Separator einer Lithiumionenbatterie,

wobei die Cellulose-Nanofaser eine Cellulose ist, besitzend einen Faserdurchmesser (Durchmesser) von 0,002 μm oder mehr und 1 μm oder weniger, eine Faserlänge von 0,5 μm oder mehr und 10 mm oder weniger, und ein Längen-Durchmesser-Verhältnis (Faserlänge der Cellulose-Nanofaser/Faserdurchmesser der Cellulose-Nanofaser) von 2 oder mehr und 100.000 oder weniger, wobei der Faserdurchmesser und die Faserlänge wie in der Beschreibung beschrieben gemessen werden;
wobei, wenn die Gesamtmenge an Feststoffgehalten der Cellulose-Nanofaser und des thermoplastischen Fluorharzes als 100 Massen-% genommen wird, die Cellulose-Nanofaser in einer Menge von 5 Massen-%

oder mehr und 80 Massen-% oder weniger enthalten ist und das thermoplastische Fluorharz in einer Menge von 20 Massen-% oder mehr und 95 Massen-% oder weniger enthalten ist; und
wobei die Cellulosefasern in einem dispergierten Zustand in dem thermoplastischen Fluorharz vorliegen.

**2.** Das Bindemittel nach Anspruch 1, wobei die Cellulose-Nanofaser eine Cellulose-Nanofaser umfasst, die einer Halbveresterung mit einer mehrbasigen Säure unterzogen wurde, um einen Teil der Hydroxylgruppen durch Carboxylgruppen zu ersetzen.

**3.** Das Bindemittel nach Anspruch 1 oder 2, wobei die Cellulose-Nanofaser eine Cellulose-Nanofaser umfasst, die einer Ethylenoxid-Additionsbehandlung oder einer Propylenoxid-Additionsbehandlung unterzogen wurde.

**4.** Das Bindemittel nach irgendeinem der Ansprüche 1 bis 3, wobei das thermoplastische Fluorharz ein Polyvinylidenfluorid oder ein Vinylidenfluorid-Copolymer umfasst.

**5.** Das Bindemittel nach irgendeinem der Ansprüche 1 bis 4, wobei das thermoplastische Fluorharz in N-Methyl-2-pyrrolidon gelöst ist und die Zellulose-Nanofasern in N-Methyl-2-pyrrolidon dispergiert sind,
wobei, wenn die Gesamtmasse der Cellulose-Nanofasern, des thermoplastischen Fluorharzes und des N-Methyl-2-pyrrolidons im Bindemittel als 100 Massen-% genommen wird, die Gesamtmenge an Feststoffgehalten der Cellulose-Nanofasern und des thermoplastischen Fluorharzes 3 Massen-% oder mehr und 30 Massen-% oder weniger beträgt.

**6.** Elektrode, umfassend das Bindemittel nach irgendeinem der Ansprüche 1 bis 5.

**7.** Die Elektrode nach Anspruch 6, umfassend ein Polymergel, umfassend Lithiumhexafluorophosphat, ein zyklisches Carbonat und ein Kettencarbonat, wobei das Polymergel eine Verbund-Cellulose-Nanofaser ist und die Verbund-Nanofaser die Cellulose-Nanofaser ist, die in einem dispergierten Zustand in dem thermoplastischen Fluorharz vorliegt.

**8.** Die Elektrode nach Anspruch 6 oder 7, umfassend eine Li-haltige aktive Substanz.

**9.** Separator, umfassend das Bindemittel nach irgendeinem der Ansprüche 1 bis 5.

**10.** Der Separator nach Anspruch 9, umfassend ein Polymergel, umfassend Lithiumhexafluorophosphat, ein zyklisches Carbonat und ein kettenförmiges Carbonat, wobei das Polymergel eine Verbund-Cellulose-Nanofaser ist und die Verbund-Nanofaser die Cellulose-Nanofaser ist, die in einem dispergierten Zustand in dem thermoplastischen Fluorharz vorliegt.

**11.** Lithiumionenbatterie, umfassend die Elektrode nach irgendeinem der Ansprüche 6 bis 8, wobei die Elektrode mit einem Separator in der Batterie integriert ist und
wobei die Elektrode durch das in der Elektrode enthaltene Bindemittel mit dem Separator verbunden und in diesen integriert ist.

**12.** Lithiumionenbatterie, umfassend den Separator nach Anspruch 9 oder 10,

wobei der Separator mit einer Elektrode in der Batterie integriert ist und
wobei der Separator durch das im Separator enthaltene Bindemittel mit der Elektrode verbunden und in diese integriert ist.

**13.** Elektrische Vorrichtung, umfassend die Batterie nach Anspruch 11 und/oder die Batterie nach Anspruch 12.

**14.** Verfahren zum Herstellen des nichtwässrigen Verbundbindemittels aus einer Cellulose-Nanofaser und einem thermoplastischen Fluorharz für eine Elektrode oder einen Separator einer Lithiumionenbatterie nach Anspruch 1, wobei das Bindemittel eine Flüssigkeit ist, in der ein thermoplastisches Fluorharz in N-Methyl-2-pyrrolidon gelöst und Cellulose-Nanofasern dispergiert sind,

wobei die Cellulose-Nanofaser eine Cellulose ist, besitzend einen Faserdurchmesser (Durchmesser) von 0,002 μm oder mehr und 1 μm oder weniger, eine Faserlänge von 0,5 μm oder mehr und 10 mm oder weniger, und ein Längen-Durchmesser-Verhältnis (Faserlänge der Cellulose-Nanofaser/Faserdurchmesser der Cellulose-Nanofaser) von 2 oder mehr und 100.000 oder weniger, wobei der Faserdurchmesser und die Faserlänge wie in der

Beschreibung beschrieben gemessen werden;
wobei das Verfahren einen Schritt (E) umfasst des Mischens der Zellulose-Nanofasern mit dem thermoplastischen Fluorharz, so dass der Anteil der Zellulose-Nanofasern 5 Massen-% oder mehr und 80 Massen-% oder weniger beträgt und der Anteil des thermoplastischen Fluorharzes 20 Massen-% oder mehr und 95 Massen-% oder weniger beträgt, wenn die Gesamtmenge des Feststoffgehalts der Zellulose-Nanofasern und des thermoplastischen Fluorharzes als 100 Massen-% genommen wird, und des Auflösens des thermoplastischen Fluorharzes in N-Methyl-2-pyrrolidon;
wobei die Zellulose-Nanofasern in einem dispergierten Zustand im thermoplastischen Fluorharz vorliegen.

**15.** Verfahren zum Herstellen einer Lithiumionenbatterie, umfassend die Elektrode nach irgendeinem der Ansprüche 6 bis 8, für mindestens eine einer positiven Elektrode und einer negativen Elektrode,

wobei das Verfahren einen Schritt (F) umfasst des
Versiegelns einer gestapelten oder gewickelten Elektrodengruppe mit einem zwischen der positiven und der negativen Elektrode angeordneten Separator in einem Batteriegehäuse zusammen mit einer Elektrolytlösung, enthaltend Lithiumhexafluorophosphat und aprotische Carbonate,
anschließenden Erhitzens des Batteriegehäuses, um dessen Temperatur auf 50 °C oder höher und 120 °C oder niedriger anzuheben,
Ausübens eines Drucks von außerhalb des Batteriegehäuses senkrecht zur Ausdehnungsrichtung der Elektrode,
wodurch der Separator mit der Elektrode, umfassend ein Verbundbindemittel aus einer Cellulose-Nanofaser und einem thermoplastischen Fluorharz, integriert wird.

**16.** Verfahren zum Herstellen einer Lithiumionenbatterie, umfassend den Separator nach Anspruch 9 oder 10,

wobei das Verfahren einen Schritt (F) umfasst des
Versiegelns einer gestapelten oder gewickelten Elektrodengruppe mit einem zwischen der positiven und der negativen Elektrode angeordneten Separator in einem Batteriegehäuse zusammen mit einer Elektrolytlösung, enthaltend Lithiumhexafluorophosphat und aprotische Carbonate,
anschließenden Erhitzens des Batteriegehäuses, um dessen Temperatur auf 50 °C oder höher und 120 °C oder niedriger anzuheben,
Ausübens eines Drucks von außerhalb des Batteriegehäuses senkrecht zur Ausdehnungsrichtung der Elektrode,
wodurch der Separator mit der Elektrode, umfassend ein Verbundbindemittel aus einer Cellulose-Nanofaser und einem thermoplastischen Fluorharz, integriert wird.

## Revendications

**1.** Liant non aqueux composite d'une nanofibre de cellulose et d'une fluororésine thermoplastique pour une électrode ou un séparateur d'une batterie lithium-ion,

dans lequel la nanofibre de cellulose est une cellulose présentant un diamètre de fibre (diamètre) de 0,002 μm ou plus et 1 μm ou moins, une longueur de fibre de 0,5 μm ou plus et 10 mm ou moins, et un rapport (longueur de fibre de la nanofibre de cellulose/diamètre de fibre de la nanofibre de cellulose) de 2 ou plus et 100 000 ou moins, dans lequel le diamètre de fibre et la longueur de fibre sont mesurés comme décrit dans la description ;
dans lequel, lorsque la quantité totale de teneur solide de la nanofibre de cellulose et de la fluororésine thermoplastique est considérée comme 100 % de masse, la nanofibre de cellulose est contenue dans une quantité de 5 % de masse ou plus et 80 pour cent de masse ou moins, et la fluororésine thermoplastique est contenue dans une quantité de 20 % de masse ou plus et 95 % de masse ou moins ; et
dans lequel les fibres de cellulose sont présentes dans un état dispersé dans la fluororésine thermoplastique.

**2.** Le liant selon la revendication 1, dans lequel la nanofibre de cellulose comprend une nanofibre de cellulose soumise à un traitement de semi-estérification par acide polybasique pour remplacer quelques-uns des groupes hydroxyles par des groupes carboxyles.

**3.** Le liant selon la revendication 1 ou 2, dans lequel la nanofibre de cellulose comprend une nanofibre de cellulose soumise à un traitement d'ajout d'oxyde d'éthylène ou un traitement d'ajout d'oxyde de propylène.

4. Le liant selon l'une quelconque des revendications 1 à 3, dans lequel la fluororésine thermoplastique comprend un fluorure de polyvinylidène ou un copolymère de fluorure de vinylidène.

5. Le liant selon l'une quelconque des revendications 1 à 4, dans lequel la fluororésine thermoplastique est dissoute dans un N-Méthyl-2-pyrrolidone, et les nanofibres de cellulose sont dispersées dans un N-Méthyl-2-pyrrolidone, dans lequel lorsqu'une masse totale des nanofibres de cellulose, de la fluororésine thermoplastique et du N-Méthyl-2-pyrrolidone dans le liant est considérée comme 100 % de masse, une quantité totale d'une teneur solide des nanofibres de cellulose et de la fluororésine thermoplastique est de 3 % de masse ou plus et de 30 % de masse ou moins.

6. Électrode comprenant le liant selon l'une quelconque des revendication 1 à 5.

7. L'électrode selon la revendication 6, comprenant un gel polymère comprenant un hexafluorophosphate de lithium, un carbonate cyclique et un carbonate en chaîne, dans laquelle le gel polymère est une nanofibre de cellulose composite, et la nanofibre composite est la nanofibre de cellulose présente dans un état dispersé dans la fluororésine thermoplastique.

8. L'électrode selon la revendication 6 ou 7 comprenant une substance active contenant du Li.

9. Séparateur comprenant le liant selon l'une quelconque des revendication 1 à 5.

10. Le séparateur selon la revendication 9, comprenant un gel polymère comprenant un hexafluorophosphate de lithium, un carbonate cyclique et un carbonate en chaîne, dans lequel le gel polymère est une nanofibre de cellulose composite, et la nanofibre composite est la nanofibre de cellulose présente dans un état dispersé dans la fluororésine thermoplastique.

11. Batterie lithium-ion comprenant l'électrode selon l'une quelconque des revendications 6 à 8,
dans laquelle l'électrode est intégrée à un séparateur dans la batterie, et dans lequel l'électrode est liée et intégrée au séparateur via le liant contenu dans l'électrode.

12. Batterie lithium-ion comprenant le séparateur selon l'une quelconque des revendications 9 ou 10,

    dans laquelle le séparateur est intégré à une électrode dans la batterie, et
    dans laquelle le séparateur est lié et intégré à l'électrode via le liant contenu dans le séparateur.

13. Dispositif électrique comprenant la batterie selon la revendication 11 et/ou la batterie selon la revendication 12.

14. Procédé de production du liant non aqueux composite d'une nanofibre de cellulose et d'une fluororésine thermoplastique pour une électrode ou un séparateur d'une batterie lithium-ion selon la revendication 1, le liant consistant en un liquide dans lequel une fluororésine thermoplastique est dissoute dans un N-Méthyl-2-pyrrolidone et des nanofibres de cellulose sont dispersées,

    dans lequel la nanofibre de cellulose est une cellulose présentant un diamètre de fibre (diamètre) de 0,002 μm ou plus et 1 μm ou moins, une longueur de fibre de 0,5 μm ou plus et 10 mm ou moins, et un rapport (longueur de fibre de la nanofibre de cellulose/diamètre de fibre de la nanofibre de cellulose) de 2 ou plus et 100 000 ou moins, dans lequel le diamètre de fibre et la longueur de fibre sont mesurés comme décrit dans la description ;
    le procédé comprenant une étape (E) de mélange des nanofibres de cellulose avec la fluororésine thermoplastique de sorte que la quantité de nanofibres de cellulose soit de 5 % de masse ou plus et 80 % de masse ou moins et la quantité de fluororésine thermoplastique soit de 20 % de masse ou plus et 95 % de masse ou moins lorsque la quantité totale de teneur solide des nanofibres de cellulose et de la fluororésine de thermoplastique est considérée comme 100 % de masse, et de dissolution de la fluororésine thermoplastique dans un N-Méthyl-2-pyrrolidone ;
    dans lequel les nanofibres de cellulose sont présentes dans un état dispersé dans la fluororésine thermoplastique.

15. Procédé de production d'une batterie lithium-ion comprenant l'électrode selon l'une quelconque des revendications 6 à 8 pour au moins une d'une électrode positive et d'une électrode négative,

le procédé comprenant une étapes(F) de
étanchéification d'un groupe d'électrodes empilées ou bobinées avec un séparateur interposé entre l'électrode positive et l'électrode négative dans un boîtier de batterie conjointement avec une solution électrolytique contenant un hexafluorophosphate de lithium et des carbonates aprotiques,
chauffage consécutif du boîtier de batterie pour élever la température de celui-ci à 50 °C ou plus et 120 °C ou moins,
application d'une pression depuis un extérieur du boîtier de batterie perpendiculairement à une direction d'extension de l'électrode,
intégration ainsi du séparateur à l'électrode comprenant un liant composite d'une nanofibre de cellulose et d'une fluororésine thermoplastique.

**16.** Procédé de production d'une batterie lithium-ion comprenant le séparateur selon la revendication 9 ou 10, le procédé comprenant une étapes(F) de

étanchéification d'un groupe d'électrodes empilées ou bobinées avec un séparateur interposé entre une électrode positive et une électrode négative dans un boîtier de batterie conjointement avec une solution électrolytique contenant un hexafluorophosphate de lithium et des carbonates aprotiques,
chauffage consécutif du boîtier de batterie pour élever la température de celui-ci à 50 °C ou plus et 120 °C ou moins,
application d'une pression depuis un extérieur du boîtier de batterie perpendiculairement à une direction d'extension de l'électrode,
intégration ainsi du séparateur à l'électrode comprenant un liant composite d'une nanofibre de cellulose et d'une fluororésine thermoplastique.

FIG.1

DISCHARGE CAPACITY (mAh/g: NCA)
220
200
180
160
140
120
100
80
60
40
20
0
0
10
20
30
40
50
CYCLE
0.1～1C
3C
UNTREATED CeNF/PVdF= 0:4 wt.% (COMPARATIVE EXAMPLE 1)
UNTREATED CeNF/PVdF= 1:3 wt.% (EXAMPLE 2)
UNTREATED CeNF/PVdF= 3:1 wt.% (EXAMPLE 1)
UNTREATED CeNF/PVdF= 4:0 wt.% (REFERENCE EXAMPLE 1)
STUDY ON UNTREATED CeNF
60℃

FIG.2

DISCHARGE CAPACITY (mAh/g: NCA)
CYCLE
0.1~1C
3C
STUDY ON SA TREATED CeNF
60°C
SA TREATED CeNF/PVdF= 0:4 wt.% (COMPARATIVE EXAMPLE 1)
SA TREATED CeNF/PVdF= 1:3 wt.% (EXAMPLE 5)
SA TREATED CeNF/PVdF= 2:2 wt.% (EXAMPLE 4)
SA TREATED CeNF/PVdF= 3:1 wt.% (EXAMPLE 3)
SA TREATED CeNF/PVdF= 4:0 wt.% (REFERENCE EXAMPLE 2)

FIG.3

220
200
180
160
140
120
100
80
60
40
20
0
0
10
20
30
40
50
DISCHARGE CAPACITY (mAh/g: NCA)
CYCLE
0.1～1C
3C
STUDY ON SAPO CeNF
60℃
SAPO CeNF/PVdF= 0:4 wt.% (COMPARATIVE EXAMPLE 1)
SAPO CeNF/PVdF= 1:3 wt.% (EXAMPLE 8)
SAPO CeNF/PVdF= 2:2 wt.% (EXAMPLE 7)
SAPO CeNF/PVdF= 3:1 wt.% (EXAMPLE 6)
SAPO CeNF/PVdF= 4:0 wt.% (REFERENCE EXAMPLE 3)

FIG.4

HARDWOOD CeNF/PVdF= 0:4 wt.% (COMPARATIVE EXAMPLE 1)
HARDWOOD CeNF/PVdF= 1:3 wt.% (EXAMPLE 11)
HARDWOOD CeNF/PVdF= 2:2 wt.% (EXAMPLE 10)
HARDWOOD CeNF/PVdF= 3:1 wt.% (EXAMPLE 9)
0.1～1C
3C
STUDY ON HARDWOOD CeNF
60°C
DISCHARGE CAPACITY (mAh/g: NCA)
CYCLE
0
10
20
30
40
50
20
40
60
80
100
120
140
160
180
200
220

FIG.5

220
200
180
160
140
120
100
80
60
40
20
0
DISCHARGE CAPACITY (mAh/g: NCA)
0
10
20
30
40
50
CYCLE
0.1～1C
3C
STUDY ON CONIFER CeNF
60℃
CONIFER CeNF/PVdF= 0:4 wt.% (COMPARATIVE EXAMPLE 1)
CONIFER CeNF/PVdF= 1:3 wt.% (EXAMPLE 14)
CONIFER CeNF/PVdF= 2:2 wt.% (EXAMPLE 13)
CONIFER CeNF/PVdF= 3:1 wt.% (EXAMPLE 12)

FIG.6

220
200
180
160
140
120
100
80
60
40
20
0
DISCHARGE CAPACITY (mAh/g: NCA)
0.1~1C
3C
STUDY ON NANOCLAY
60°C
NANOCLAY : PVdF= 0:4 wt.% (COMPARATIVE EXAMPLE 1)
NANOCLAY /PVdF= 1:3 wt.% (REFERENCE EXAMPLE 6)
NANOCLAY /PVdF= 2:2 wt.% (REFERENCE EXAMPLE 5)
NANOCLAY /PVdF= 3:1 wt.% (REFERENCE EXAMPLE 4)
0
10
20
30
40
50
CYCLE

FIG.7

220
200
180
160
140
120
100
80
60
40
20
0
DISCHARGE CAPACITY (mAh/g: NCA)
0
10
20
30
40
50
CYCLE
0.1～1C
3C
UNTREATED CeNF/PVdF= 0:4 wt.%
(COMPARATIVE EXAMPLE 1)
UNTREATED CeNF/PVdF= 1:3 wt.%
(EXAMPLE 2)
UNTREATED CeNF/PVdF= 2:2 wt.%
UNTREATED CeNF/PVdF= 3:1 wt.%
(EXAMPLE 1)
UNTREATED CeNF/PVdF= 4:0 wt.%
(REFERENCE EXAMPLE 1)
STUDY ON UNTREATED CeNF
80℃

FIG.8

SA TREATED CeNF/PVdF= 0:4 wt.% (COMPARATIVE EXAMPLE 1)
SA TREATED CeNF/PVdF= 1:3 wt.% (EXAMPLE 5)
SA TREATED CeNF/PVdF= 2:2 wt.% (EXAMPLE 4)
SA TREATED CeNF/PVdF= 3:1 wt.% (EXAMPLE 3)
SA TREATED CeNF/PVdF= 4:0 wt.% (REFERENCE EXAMPLE 2)
0.1～1C
3C
STUDY ON SA TREATED CeNF
80℃
DISCHARGE CAPACITY (mAh/g; NCA)
CYCLE
220
200
180
160
140
120
100
80
60
40
20
0
10
20
30
40
50

FIG.9
220
200
180
160
140
120
100
80
60
40
20
0
0
10
20
30
40
50
DISCHARGE CAPACITY (mAh/g; NCA)
CYCLE
0.1～1C
3C
SAPO CeNF/PVdF= 0:4 wt.% (COMPARATIVE EXAMPLE 1)
SAPO CeNF/PVdF= 1:3 wt.% (EXAMPLE 8)
SAPO CeNF/PVdF= 2:2 wt.% (EXAMPLE 7)
SAPO CeNF/PVdF= 3:1 wt.% (EXAMPLE 6)
SAPO CeNF/PVdF= 4:0 wt.% (REFERENCE EXAMPLE 3)
STUDY ON SAPO CeNF
80℃

FIG.10

220
200
180
160
140
120
100
80
60
40
20
0
DISCHARGE CAPACITY (mAh/g: NCA)
0
10
20
30
40
50
CYCLE
0.1~1C
3C
HARDWOOD CeNF/PVdF= 0:4 wt.% (COMPARATIVE EXAMPLE 1)
HARDWOOD CeNF/PVdF= 1:3 wt.% (EXAMPLE 11)
HARDWOOD CeNF/PVdF= 2:2 wt.% (EXAMPLE 10)
HARDWOOD CeNF/PVdF= 3:1 wt.% (EXAMPLE 9)
STUDY ON HARDWOOD CeNF
80℃

FIG.11

CONIFER CeNF/PVdF= 0:4 wt.% (COMPARATIVE EXAMPLE 1)
CONIFER CeNF/PVdF= 1:3 wt.% (EXAMPLE 14)
0.1～1C
3C
STUDY ON CONIFER CeNF
80°C
DISCHARGE CAPACITY (mAh/g: NCA)
CYCLE
220
200
180
160
140
120
100
80
60
40
20
0
0
10
20
30
40
50

FIG.12

220
200
180
160
140
120
100
80
60
40
20
0
0
10
20
30
40
50
CYCLE
DISCHARGE CAPACITY (mAh/g; NCA)
0.1～1C
3C
NANOCLAY /PVdF= 0:4 wt.%
NANOCLAY CeNF/PVdF= 1:3 wt.%
NANOCLAY CeNF/PVdF= 2:2 wt.%
NANOCLAY CeNF/PVdF= 3:1 wt.%
(COMPARATIVE EXAMPLE 1)
(REFERENCE EXAMPLE 6)
(REFERENCE EXAMPLE 5)
(REFERENCE EXAMPLE 4)
STUDY ON NANOCLAY
80℃

FIG.13

PVdF/CeNF= 50/50wt.%
(EXAMPLE 16)
PVdF/CeNF= 75/25wt.%
(EXAMPLE 15)
CeNF= 100wt.%
(REFERENCE EXAMPLE 7)
PVdF= 100wt.%
(COMPARATIVE EXAMPLE 2)
COMPARATIVE EXAMPLE 2
EXAMPLE 16
EXAMPLE 15
REFERENCE EXAMPLE 7
30°C、0.2C-rate
DISCHARGE CAPACITY (mAh/g: NCM523)
CYCLE
250
200
150
100
50
0
0
20
40
60
80
100

FIG.14

250
200
150
100
50
0
0
20
40
60
80
100
120
CYCLE
DISCHARGE CAPACITY (mAh/g: NCM523)
COMPARATIVE EXAMPLE 2
EXAMPLE 16
EXAMPLE 15
REFERENCE EXAMPLE 7
PVdF/CeNF= 50/50wt.%
(EXAMPLE 16)
CeNF= 100wt.%
(REFERENCE EXAMPLE 7)
PVdF/CeNF= 75/25wt.%
(EXAMPLE 15)
PVdF= 100wt.%
(COMPARATIVE EXAMPLE 2)
60℃、0.2C-rate

FIG.15

(BINDER 4)
CeNF
(BINDER 25)
PVdF
BEFORE ADDING LiOH
IMMEDIATELY AFTER ADDING LiOH
AFTER BEING LEFT FOR 12 HOURS
GELATION RESISTANCE TEST 1
GELATION RESISTANCE TEST 2

FIG.16

150
100
50
0
0.1～0.5C
1C
60℃
(EXAMPLE 20)
(EXAMPLE 19)
(EXAMPLE 18)
(EXAMPLE 17)
(COMPARATIVE EXAMPLE 3)
DISCHARGE CAPACITY (mAh/g: NCM111)
UNCOATED (COMPARATIVE EXAMPLE 3)
BINDER 5 /Al2O3= 100:0 wt.% (EXAMPLE 17)
BINDER 5 /Al2O3= 60: 40 wt.% (EXAMPLE 18)
BINDER 5 /Al2O3= 40: 60 wt.% (EXAMPLE 19)
BINDER 5 /Al2O3= 20: 80 wt.% (EXAMPLE 20)
0
10
20
30
40
50
CYCLE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002260663 A
- WO 2014185365 A1
- JP 2015101694 A
- JP 2009293167 A
- WO 2014196551 A1
- JP 2013185085 A
- EP 3098880 A1
- JP 2014057627 T
- JP 5999683 B
- JP 6102837 B
- JP 2013084521 A
- JP 2016021332 A
- JP 6149147 B


### Non-patent literature cited in the description


- **TAKASHI MUKAI et al.** *Industrial Materials*, 2015, vol. 63 (12), 18-23
- **TAKASHI MUKAI et al.** *Material Stage*, 2017, vol. 17 (5), 29-33
- **TAKASHI MUKAI et al.** Lithium-ion secondary battery-approach to material design and evaluation method for higher capacity and improved characteristics. Information Technology Co., Ltd., 2017, 210-220